# EUROPEAN PATENT APPLICATION

(11) **EP 4 647 303 A1**
(43) Date of publication of application: **12.11.2025**
(21) Application number: 24788072.7
(22) Date of filing: 09.04.2024
(51) Int. Cl.: B60R 11/02, B60N 2/90, H02J 7/00

(54) **SUPPORT, BEARING MEMBER AND SEAT ASSEMBLY**

(30) Priority: 13.04.2023 CN 202310428881
(71) Applicant: Huawei Technologies Co., Ltd., Shenzhen, Guangdong 518129 (CN)
(72) Inventor: LI, Bisheng, Shenzhen, Guangdong 518129 (CN); WANG, Chengzhen, Shenzhen, Guangdong 518129 (CN); ZHANG, Tianzhu, Shenzhen, Guangdong 518129 (CN); JIANG, Haichuan, Shenzhen, Guangdong 518129 (CN); XU, Hao, Shenzhen, Guangdong 518129 (CN); SHI, Hao, Shenzhen, Guangdong 518129 (CN)
(74) Representative: Goddar, Heinz J.
(86) International application number: PCT/CN2024/086883
(87) International publication number: WO 2024/212970

(57) **Abstract**

This application provides a support (105), a bearing member (101), and a seat assembly (1a). The support (105) may be configured to be electrically connected to the bearing member (101), and the support (105) includes a first support member (150), a second support member (160), and a first conductive contact (171). The second support member (160) is located on a side of the first support member (150), and a side that is of the first support member (150) and that faces away from the second support member (160) is configured to be inserted into the bearing member (101). The first conductive contact (171) is exposed on the side that is of the first support member (150) and that faces away from the second support member (160), and the first conductive contact (171) is configured to be in contact with a second conductive contact (172) of the bearing member (101). Because a distance between the bearing member (101) and an electronic device (2) is short, disordered cabling caused by a long open wire used between the bearing member (101) and the electronic device (2) can be avoided. This improves visual experience of a user and improves use safety.

## Description

This application claims priority to Chinese Patent Application No. 202310428881.6, filed with the China National Intellectual Property Administration on April 13, 2023 and entitled "SUPPORT, BEARING MEMBER, AND SEAT ASSEMBLY", which is incorporated herein by reference in its entirety.

### TECHNICAL FIELD

This application relates to the field of terminal technologies, and in particular, to a support, a bearing member, and a seat assembly.

### BACKGROUND

Vehicles, as indispensable and important means of transportation in our life, are widely used in people's life, to meet people's requirements for convenient, fast, and efficient travel. More people use tablet electronic devices to watch videos, listen to music, play games, or the like in a driving process, to improve entertainment in the driving process.

In a related technology, a vehicle may include front seats and a tablet electronic device fastened to a back of a front seat, and a user sitting in a rear seat may use the tablet electronic device. This can avoid fatigue and inconvenience caused by holding the tablet electronic device by the user.

However, charging cables between the tablet electronic device and a charging interface on the vehicle are disordered.

### SUMMARY

Embodiments of this application provide a support, a bearing member, and a seat assembly, to avoid disordered cabling caused by a long open wire disposed between the bearing member and an electronic device, thereby improving visual experience of a user and improving use safety.

A first aspect of embodiments of this application provides a support, configured to be electrically connected to a bearing member. The support includes a first support member, a second support member, and a first conductive contact, the second support member is located on a side of the first support member, and a side that is of the first support member and that faces away from the second support member is configured to be inserted into the bearing member. The first conductive contact is exposed on the side that is of the first support member and that faces away from the second support member, and the first conductive contact is configured to be in contact with a second conductive contact of the bearing member.

The support provided in embodiments of this application may include the first support member, the second support member, and the first conductive contact, and the first support member is configured to be inserted into the bearing member, so that a connection between the first support member and the bearing member is simple and convenient, thereby simplifying mounting and removal procedures of a user. The first conductive contact is exposed on the side that is of the first support member and that faces away from the second support member, the first conductive contact is configured to be in contact with the second conductive contact of the bearing member, and the support and the bearing member may be electrically connected through the first conductive contact and the second conductive contact (which is equivalent to a contact connection manner). The support may charge an electronic device through the bearing member. Because a distance between the bearing member and the electronic device is short, disordered cabling caused by a long open wire used between the bearing member and the electronic device can be avoided. This improves visual experience of a user and improves use safety. In addition, because the bearing member and the support are connected through contacts, no open wire between the bearing member and the support is needed. This further improves visual experience of the user and improves use safety.

In a possible implementation, two first locking members are spaced apart on the first support member in a first direction, and a first locking part of the first locking member is exposed on the side that is of the first support member and that faces away from the second support member; the first locking part is configured to be inserted into a first fitting locking part of the bearing member, to form a first locked state of the support and the bearing member; and insertion directions of the first locking part and the first fitting locking part are in the first direction, and the first direction is different from a direction from the first support member to the bearing member.

In this way, because the first locking part and the first fitting locking part implement locking of the first support member and the bearing member through insertion, it is simple and convenient to operate, so that mounting and removal procedures of the user can be simplified, and user experience can be improved.

In a possible implementation, the support further includes a first locking elastic member, where the first support member has a first support cavity, and the first locking elastic member and at least a part of the first locking member are located in the first support cavity; and the first locking elastic member is separately connected to the first support member and the first locking member, and the first locking elastic member is configured to drive the first locking part to move in a direction toward the first fitting locking part, to form the first locked state of the support and the bearing member.

In this way, a reliable locking state can be formed between the first locking part and the first fitting locking part, to ensure that the support and the bearing member do not shake firmly after being assembled, and avoid cases such as damage to the bearing member and the electronic device and injury to the user caused by falling of the bearing member and the electronic device, and ensure use safety of the electronic device.

In a possible implementation, the support includes a first unlocking assembly, where at least a part of the first unlocking assembly is located in the first support cavity, and a first operation end of the first unlocking assembly is exposed outside the first support member; and the first unlocking assembly is configured to drive one of the first locking part and the first fitting locking part to move away from the other, so that the first locking part is detached from the first fitting locking part, to form a first unlocked state of the support and the bearing member.

In this way, the first locked state between the first locking part and the first fitting locking part can be released by using the first unlocking assembly.

In a possible implementation, there is a first preset center between the two first locking members; and the first locking part is a first locking protrusion, and the first locking protrusion is configured to be inserted into the first fitting locking part in a direction toward the first preset center; or the first locking part is a first locking groove, and the first fitting locking part is inserted into the first locking groove in a direction away from the first preset center. The support further includes a first rotating shaft, the first locking member includes a first rotating part facing away from the first locking part, both the first rotating part and the first rotating shaft are located in the first support cavity, and the first rotating part is rotatably connected to the first support member through the first rotating shaft. The first locking part rotates in a direction close to the first preset center under elastic force of the first locking elastic member.

In a possible implementation, the first unlocking assembly includes a first operation member, a first unlocking member, and two second unlocking members, the first unlocking member and the second unlocking members are all located in the first support cavity, the second unlocking members one-to-one correspond to the first locking members, the first operation member is provided with the first operation end, and the first operation end is exposed on a side that is of the first support member and that faces the second support member. The second unlocking members respectively abut against two opposite sides of the first unlocking member in the first direction, and a side that is of the second unlocking member and that faces away from the first unlocking member abuts against the corresponding first locking member. The first operation member is connected to the first unlocking member, the first unlocking member is movably connected to the first support member in a first unlocking direction of the first operation member, and the second unlocking member is movably connected to the first support member in the first direction. In the first unlocking direction, at least one of a length of the first unlocking member in the first direction and a distance between the two second unlocking members in the first direction gradually decreases, and the first unlocking direction is perpendicular to the first direction.

In this way, a simple inserting connection and pressing/pushing unlocking can be implemented between the first support member and the bearing member. A structure is simple, helps reduce a volume, is convenient for the user to store, and simplifies mounting and removal.

In a possible implementation, the support includes a first magnetic member, where the first magnetic member is located in the first support member, and the first magnetic member is configured to attract a second magnetic member of the bearing member.

In this way, stability of a connection between the support and the bearing member can be improved, and shaking between the support and the bearing member can be reduced.

In a possible implementation, a first limiting member is disposed on the first support member, the first limiting member is exposed on the side that is of the first support member and that faces away from the second support member, the first limiting member is annularly disposed on an outer periphery of the first conductive contact, and the first limiting member is configured to be inserted into a second limiting member of the bearing member.

In this way, a relative position between the first support member and the fitting member may be limited in each direction, to avoid shaking between the first support member and the fitting member in each direction. When the vehicle shakes due to a bumpy road in a traveling process, fitting between the first limiting member and the second limiting member can offset acting force generated by the shaking, thereby ensuring that the electronic device also remains stable and safe in the traveling process.

In a possible implementation, a first anti-reverse member is disposed on the first support member, the first anti-reverse member is exposed on the side that is of the first support member and that faces away from the second support member, and the first anti-reverse member is configured to be inserted into a second anti-reverse member of the bearing member.

In this way, incorrect assembly of the first support member and the fitting member can be prevented, thereby implementing a foolproof design.

In a possible implementation, an end that is of the second support member and that faces away from the first support member is configured to be inserted into a mounting groove of a mounting interface, two second locking members are spaced apart on the second support member in a second direction, and a second locking part of the second locking member is exposed to an outer side of the second support member. The second locking part is configured to be inserted into a second fitting locking part of the mounting interface, to form a second locked state of the support and the mounting interface. Insertion directions of the second locking part and the second fitting locking part are in the second direction, and the second direction is different from a groove depth direction of the mounting groove.

In this way, because the second locking part and the second fitting locking part implement locking of the support and the mounting interface through insertion, it is simple and convenient to operate, so that mounting and removal procedures of the user can be simplified, and user experience can be improved.

In a possible implementation, the support includes two second unlocking assemblies, where the second unlocking assemblies are disposed in a one-to-one correspondence with the second locking members, the second support member has a second support cavity, at least a part of the second unlocking assembly is located in the second support cavity, and a second operation end of the second unlocking assembly is exposed outside the second support cavity and the mounting groove. The second unlocking assembly is configured to drive one of the second locking part and the second fitting locking part to move away from the other, so that the second locking part is detached from the second fitting locking part, to form a second unlocked state of the support and the mounting interface.

In this way, the second locked state of the second locking part and the second fitting locking part may be released by using the second unlocking assembly, to separate the support from the mounting interface.

In a possible implementation, there is a second preset center between the two second locking members, the second locking part is a second locking groove, and the second fitting locking part is inserted into the second locking groove in a direction toward the second preset center. The second locking groove communicates with the second support cavity, the second unlocking assembly includes a second operation member, a third unlocking member, and a fourth unlocking member, the second operation end is disposed on the second operation member, and the third unlocking member and the fourth unlocking member are located in the second support cavity. A first end in an extension direction of the third unlocking member is connected to the second operation member, a second end in an extension direction of the third unlocking member is connected to the fourth unlocking member, the fourth unlocking member is disposed opposite to the second locking groove, and a middle section of the third unlocking member is rotatably connected to the second support member. The second operation member drives the first end to move in the direction toward the second preset center, and the second end drives the fourth unlocking member to move in a direction away from the second preset center, so that at least a part of the fourth unlocking member passes through the second locking groove and is located outside the second support member.

In this way, a simple inserting connection and pressing/pushing unlocking can be implemented between the second support member and the mounting interface. A structure is simple, helps reduce a volume, is convenient to store, and simplifies mounting and removal.

In a possible implementation, the support includes a third magnetic member, where the third magnetic member is disposed close to an end that is of the second support member and that is away from the first support member, and the third magnetic member is configured to repel a fourth magnetic member of the mounting interface.

In this way, the third magnetic member and the fourth magnetic member repel each other, and the repulsive force may push the second protective end to move toward a bottom wall of the mounting groove. This helps push a protective member away and insert the second support member into the mounting groove.

In a possible implementation, the support includes a third conductive contact, where the third conductive contact is exposed on a side that is of the second support member and that is away from the first support member, and the third conductive contact is configured to be in contact with a fourth conductive contact of the mounting interface and is electrically connected to the first conductive contact.

In this way, because the second support member and the mounting interface are connected through contacts, no open wire between the second support member and the mounting interface is needed, thereby reducing impact on a layout of another mechanical member in the mounting groove.

A second aspect of embodiments of this application provides a bearing member, configured to be electrically connected to a support and a to-be-borne member. The bearing member includes a fitting member and a second conductive contact, a side of the fitting member is configured to be inserted into the support, and a side that is of the fitting member and that faces away from the support is configured to face the to-be-borne member. The second conductive contact is exposed on a side that is of the fitting member and that faces the support, and the second conductive contact is configured to be in contact with a first conductive contact of the support.

The bearing member provided in embodiments of this application is configured to be inserted into the support, the support may include a first support member, a second support member, and the first conductive contact, and the first support member is configured to be inserted into the bearing member, so that a connection between the first support member and the bearing member is simple and convenient, thereby simplifying mounting and removal procedures. The first conductive contact is exposed on a side that is of the first support member and that faces away from the second support member, the first conductive contact is configured to be in contact with the second conductive contact of the bearing member, and the support and the bearing member may be electrically connected through the first conductive contact and the second conductive contact (which is equivalent to a contact connection manner). The support may charge an electronic device through the bearing member. Because a distance between the bearing member and the electronic device is short, disordered cabling caused by a long open wire used between the bearing member and the electronic device can be avoided. This improves visual experience of a user and improves use safety. In addition, because the bearing member and the support are connected through contacts, no open wire between the bearing member and the support is needed. This further improves visual experience of the user and improves use safety.

In a possible implementation, a clamping member is located on at least a part of an outer periphery of the fitting member, the clamping member includes a clamping part away from the fitting member, the clamping part extends in a direction away from the support, and the clamping part is configured to abut against an outer peripheral wall of the to-be-borne member.

In a possible implementation, the bearing member further includes a charging interface and a retractable charging connector, where the charging interface is configured to be electrically connected to the to-be-borne member, at least a part of the charging connector is located in the clamping member, at least a part of the charging interface is located on a side that is of the clamping part and that faces the fitting member, the charging interface is connected to a movable end of the charging connector and is electrically connected to the second conductive contact through the charging connector, and the charging interface moves in a direction close to or away from the fitting member.

In this way, when the charging interface is retracted back to the clamping member, there can be no open wire interference, thereby implementing imperceptible charging, and improving visual experience of the user.

In a possible implementation, the clamping member is disposed around an outer periphery of the fitting member, the clamping member and the fitting member jointly form an accommodation groove facing away from the support, and the accommodation groove is configured to accommodate the to-be-borne member.

In this way, the clamping member can better protect the electronic device.

In a possible implementation, the clamping member includes a plurality of clamping sub-members, and the plurality of clamping sub-members are spaced apart in a circumferential direction of the fitting member; and the plurality of clamping sub-members include a first clamping sub-member and a second clamping sub-member, and the first clamping sub-member and the second clamping sub-member are respectively located on two opposite sides of the fitting member.

In this way, a weight of the clamping member is light, and an accommodating volume can be reduced after the clamping sub-member is retracted.

In a possible implementation, the clamping member and the fitting member are relatively static, and the movable end moves in a direction close to or away from the clamping member. The bearing member further includes a reset assembly, the clamping member has a clamping cavity, the reset assembly is located in the clamping cavity, and the reset assembly is connected to the movable end. The reset assembly is configured to drive the movable end to move in the direction close to the clamping member, to form a retracted state of the charging interface.

In this way, the charging interface and a fitting interface of the electronic device can be automatically interconnected. Therefore, it is simple to operate, and user experience can be improved.

In a possible implementation, the reset assembly includes a reset member and a first reset elastic member, the reset member is movably connected to the clamping member in a telescopic direction of the charging connector, and the reset member is connected to the movable end; and the first reset elastic member is separately connected to the reset member and the clamping member, and the reset member drives, under elastic force of the first reset elastic member, the movable end to move in the direction close to the clamping member, to form the retracted state of the charging interface.

In this way, a structure of the reset assembly is simple and is easy to implement.

In a possible implementation, each clamping sub-member is telescopically connected to the fitting member, a clamping part of each clamping sub-member moves in the direction close to or away from the fitting member, and a clamping part of one clamping sub-member is connected to the movable end and is static relative to the movable end.

In this way, the charging interface can be retracted and extended through retraction and extension of the clamping sub-member, thereby relieving stress on the charging interface.

In a possible implementation, two first fitting locking members are spaced apart on the fitting member in a first direction, and a first fitting locking part of the first fitting locking member is exposed on the side that is of the fitting member and that faces the support; the first fitting locking part is configured to be inserted into a first locking part of the support, to form a first locked state of the support and the bearing member; and insertion directions of the first locking part and the first fitting locking part are in the first direction, and the first direction is different from a direction from a first support member of the support to the bearing member.

In this way, because the first locking part and the first fitting locking part implement locking of the first support member and the bearing member through insertion, it is simple and convenient to operate, so that mounting and removal procedures of a user can be simplified, and user experience can be improved.

In a possible implementation, there is a first fitting center between the two first fitting locking members; and the first fitting locking part is a first locking groove, and the first locking part is inserted into the first locking groove in a direction toward the first fitting center; or the first fitting locking part is a first locking protrusion, and the first locking protrusion is configured to be inserted into the first locking part in a direction away from the first fitting center.

In this way, there are various implementations for the first locking part and the first fitting locking part, and these implementations are applicable to many scenarios.

In a possible implementation, the bearing member includes a second magnetic member, where the second magnetic member is located in the fitting member, and the second magnetic member is configured to attract a first magnetic member of the support.

In this way, stability of a connection between the support and the bearing member can be improved, and shaking between the support and the bearing member can be reduced.

In a possible implementation, a second limiting member is disposed on the fitting member, the second limiting member is exposed on the side that is of the fitting member and that faces the support, the second limiting member is annularly disposed on an outer periphery of the second conductive contact, and the second limiting member is configured to be inserted into a first limiting member of the support.

In this way, a relative position between the first support member and the fitting member may be limited in each direction, to avoid shaking between the first support member and the fitting member in each direction. When the vehicle shakes due to a bumpy road in a traveling process, fitting between the first limiting member and the second limiting member can offset acting force generated by the shaking, thereby ensuring that the electronic device also remains stable and safe in the traveling process.

In a possible implementation, a second anti-reverse member is disposed on the fitting member, the second anti-reverse member is exposed on the side that is of the fitting member and that faces the support, and the second anti-reverse member is configured to be inserted into a first anti-reverse member of the support.

In this way, incorrect assembly of the first support member and the fitting member can be prevented, thereby implementing a foolproof design.

A third aspect of embodiments of this application provides a support assembly, including the support in the first aspect and the bearing member in the second aspect.

The support assembly provided in embodiments of this application may include the support and the bearing member, the support may include a first support member, a second support member, and a first conductive contact, and the first support member is configured to be inserted into the bearing member, so that a connection between the first support member and the bearing member is simple and convenient, thereby simplifying mounting and removal procedures of a user. The first conductive contact is exposed on a side that is of the first support member and that faces away from the second support member, the first conductive contact is configured to be in contact with a second conductive contact of the bearing member, and the support and the bearing member may be electrically connected through the first conductive contact and the second conductive contact (which is equivalent to a contact connection manner). The support may charge an electronic device through the bearing member. Because a distance between the bearing member and the electronic device is short, disordered cabling caused by a long open wire used between the bearing member and the electronic device can be avoided. This improves visual experience of a user and improves use safety. In addition, because the bearing member and the support are connected through contacts, no open wire between the bearing member and the support is needed. This further improves visual experience of the user and improves use safety.

A fourth aspect of embodiments of this application provides a seat assembly, including a seat, a mounting interface, the support according to the first aspect, and the bearing member according to the second aspect. The mounting interface includes a mounting member, at least a part of the mounting member is located in the seat, the mounting member has a mounting groove, an opening of the mounting groove is exposed to an outer side of the seat, and an end that is of a second support member of the support and that is away from a first support member of the support is inserted into the mounting groove.

The seat assembly provided in embodiments of this application may include the support and the bearing member, the support may include the first support member, the second support member, and a first conductive contact, and the first support member is configured to be inserted into the bearing member, so that a connection between the first support member and the bearing member is simple and convenient, thereby simplifying mounting and removal procedures of a user. The first conductive contact is exposed on a side that is of the first support member and that faces away from the second support member, the first conductive contact is configured to be in contact with a second conductive contact of the bearing member, and the support and the bearing member may be electrically connected through the first conductive contact and the second conductive contact (which is equivalent to a contact connection manner). The support may charge an electronic device through the bearing member. Because a distance between the bearing member and the electronic device is short, disordered cabling caused by a long open wire used between the bearing member and the electronic device can be avoided, thereby improving visual experience of the user and improving use safety. In addition, because the bearing member and the support are connected through contacts, no open wire between the bearing member and the support is needed. This further improves visual experience of the user and improves use safety.

In a possible implementation, two second fitting locking members are spaced apart on the mounting member in a second direction, a second fitting locking part of the second fitting locking member is exposed to an inner side of the mounting groove, and the second fitting locking part is inserted into a second locking part on the second support member, to form a second locked state of the support and the mounting interface.

Insertion directions of the second locking part and the second fitting locking part are in the second direction, and the second direction is different from a groove depth direction of the mounting groove.

In this way, because the second locking part and the second fitting locking part implement locking of the support and the mounting interface through insertion, it is simple and convenient to operate, so that mounting and removal procedures of the user can be simplified, and user experience can be improved.

In a possible implementation, the mounting interface includes a second locking elastic member and a second rotating shaft, the second fitting locking member includes a second rotating part facing away from the second fitting locking part, the second locking elastic member is separately connected to the mounting member and the second fitting locking member, the second rotating part is rotatably connected to the mounting member through the second rotating shaft, there is a second fitting center between the two second fitting locking members, the second fitting locking part is a second locking protrusion, the second locking protrusion is inserted into the second locking part in a direction toward the second fitting center, and the second locking protrusion rotates in the direction toward the second fitting center under elastic force of the second locking elastic member.

In this way, a reliable locked state can be formed between the second locking part and the second fitting locking part, to ensure that the support and the mounting interface are firmly assembled and do not shake, avoid cases such as damage to the support assembly and the electronic device and injury to a user caused by falling of the support assembly and the electronic device, and ensure use safety of the electronic device.

In a possible implementation, the mounting interface includes a protective member, the protective member covers the opening of the mounting groove, a first protective end of the protective member is rotatably connected to the mounting member, and a second protective end of the protective member rotates in a direction close to or away from a bottom wall of the mounting groove.

In this way, the protective member may be configured to cover the opening of the mounting groove, to prevent external sundries, dust, and the like from entering the mounting groove, so as to protect a mechanical member in the mounting groove.

In a possible implementation, the mounting interface includes a second reset elastic member, a third rotating shaft, and a stopper, where the protective member is rotatably connected to the mounting member through the third rotating shaft, and the stopper is located on a side that is of the protective member and that faces away from the bottom wall of the mounting groove; and the second reset elastic member is configured to drive the second protective end to rotate in the direction away from the bottom wall of the mounting groove, so that the second protective end abuts against the stopper, to form a reset state of the protective member.

In this way, the second reset elastic member may provide the second protective end with elastic force away from the bottom wall of the mounting groove, and when the support and the mounting interface are not assembled, the elastic force may prevent a user (for example, a child) from extending a finger or another object into the mounting groove, thereby improving use safety of the mounting interface, avoiding a misoperation, and protecting the mounting groove.

In a possible implementation, the mounting interface further includes a fourth magnetic member, where the fourth magnetic member is located on a side that is of the second protective end and that faces the bottom wall of the mounting groove, and the fourth magnetic member is configured to repel a third magnetic member of the support.

In this way, the third magnetic member and the fourth magnetic member repel each other, and the repulsive force may push the second protective end to move toward the bottom wall of the mounting groove. This helps push the protective member away and insert the second support member into the mounting groove.

In a possible implementation, the mounting interface further includes a fourth conductive contact, where the fourth conductive contact is disposed on the mounting member and exposed to the inner side of the mounting groove, and the fourth conductive contact is configured to be in contact with a third conductive contact of the support.

In this way, because the second support member and the mounting interface are connected through contacts, no open wire between the second support member and the mounting interface is needed, thereby reducing impact on a layout of another mechanical member in the mounting groove.

Structures, other objectives, and beneficial effect of this application are clearer and more understandable through descriptions of preferred embodiments with reference to accompanying drawings.

### BRIEF DESCRIPTION OF DRAWINGS

FIG. 1 is an assembly diagram of an electronic device, a support assembly, and a seat according to an embodiment of this application;
FIG. 2 is a diagram of applying a charging system to a seat according to an embodiment of this application;
FIG. 3 is a diagram of a partial structure of a vehicle according to an embodiment of this application;
FIG. 4 is a diagram of a structure in which a support is mounted on a seat according to an embodiment of this application;
FIG. 5 is a diagram of another structure in which a support is mounted on a seat according to an embodiment of this application;
FIG. 6 is an assembly diagram of an electronic device and a support assembly according to an embodiment of this application;
FIG. 7 is an assembly diagram of a support and a bearing member according to an embodiment of this application;
FIG. 8 is another assembly diagram of an electronic device and a support assembly according to an embodiment of this application;
FIG. 9 is another assembly diagram of an electronic device and a support assembly according to an embodiment of this application;
FIG. 10 is a diagram of a structure of a support according to an embodiment of this application;
FIG. 11 is a diagram of a partial structure of a support according to an embodiment of this application;
FIG. 12 is a diagram of a disassembled structure of a support according to an embodiment of this application;
FIG. 13 is a diagram of a disassembled structure of a bearing member according to an embodiment of this application;
FIG. 14 is a partial cross-sectional view of a bearing member according to an embodiment of this application;
FIG. 15 is a diagram of a structure in which an electronic device is mounted on a bearing member according to an embodiment of this application;
FIG. 16 is a diagram of another structure in which an electronic device is mounted on a bearing member according to an embodiment of this application;
FIG. 17 is a diagram of a structure of a bearing member according to an embodiment of this application;
FIG. 18 is a diagram of another structure of a bearing member according to an embodiment of this application;
FIG. 19 is a diagram of another structure of a bearing member according to an embodiment of this application;
FIG. 20 is a diagram of a structure of a bearing member from which a first clamping housing is removed according to an embodiment of this application;
FIG. 21 is a diagram of a partial disassembled structure of a bearing member according to an embodiment of this application;
FIG. 22 is a diagram of another structure of a bearing member according to an embodiment of this application;
FIG. 23 is a diagram of a structure of a fitting member according to an embodiment of this application;
FIG. 24 is a diagram of a structure of a first support cavity from which a second housing wall is removed according to an embodiment of this application;
FIG. 25 is a diagram of a structure of a support according to an embodiment of this application;
FIG. 26 is a diagram of a structure of a first operation end according to an embodiment of this application;
FIG. 27 is a diagram of a partial disassembled structure of a support according to an embodiment of this application;
FIG. 28 is a side view of a mounting interface according to an embodiment of this application;
FIG. 29 is a diagram of a structure of a mounting interface according to an embodiment of this application;
FIG. 30 is a diagram of a partial structure of a support from which a second support housing is removed according to an embodiment of this application;
FIG. 31 is a diagram of another partial structure of a support according to an embodiment of this application;
FIG. 32 is a diagram of another structure of a mounting interface according to an embodiment of this application;
FIG. 33 is a diagram of a partial structure of a mounting interface according to an embodiment of this application;
FIG. 34 is a diagram of a disassembled structure of a mounting interface according to an embodiment of this application;
FIG. 35 is a diagram of another disassembled structure of a mounting interface according to an embodiment of this application;
FIG. 36 is a diagram of another partial structure of a support from which a second support housing is removed according to an embodiment of this application;
FIG. 37 is a distribution diagram of third magnetic members and fourth magnetic members according to an embodiment of this application; and
FIG. 38 is a diagram of another partial structure of a support according to an embodiment of this application.

### Reference numerals:

1: vehicle; 2: electronic device; 1a: seat assembly;
10: seat; 11: headrest; 12: backrest;
13: charging system; 13a: first detection cable; 13b: second detection cable;
13c: charging cable; 13d: ground cable; 14: seat frame;
15: cable; 16: bonding member; 21: control console;
22: central handrail; 23: door trim panel; 100: support assembly;
101: bearing member; 110: fitting member; 111: fitting housing;
1111: first fitting housing; 1112: second fitting housing; 112: reinforcement housing;
113: fitting cavity; 120: clamping member; 120a: clamping sub-member;
121a: first clamping sub-member; 122a: second clamping sub-member; 123a: third clamping sub-member;
124a: fourth clamping sub-member; 125: clamping part; 126: accommodation groove;
127: clamping cavity; 1281: first clamping housing; 1282: second clamping housing;
129: sliding groove; 131: charging interface; 132: charging connector;
132a: movable end; 132b: connection end; 133: insulation member;
134: reinforcement member; 140: reset assembly; 141: first reset elastic member;
142: reset member; 1421: hollow part; 105: support;
150: first support member; 151: first support housing; 1511: first housing wall;
1512: second housing wall; 152: first support cavity; 160: second support member;
162: second support housing; 163: assembly member; 1631: first assembly member;
1632: second assembly member; 164: second support cavity; 171: first conductive contact;
172: second conductive contact; 173: third conductive contact; 181: first conductive member;
182: second conductive member; 183: third conductive member; 109: mounting interface;
191: mounting member; 192: second reset elastic member; 193: third rotating shaft;
194: mounting groove; 195: protective member; 195a: first protective member;
195b: second protective member; 1951: first protective end; 1952: second protective end;
196: stopper; 197: elastic cushioning member; 198: elastic abutting member;
210: first locking member; 211: first locking part; 212: first rotating part;
220: first fitting locking member; 221: first fitting locking part; 230: second locking member;
232: second locking part; 240: second fitting locking member; 241: second fitting locking part;
242: second rotating part; 251: first inclined surface; 252: second inclined surface;
261: first locking elastic member; 262: second locking elastic member; 271: first rotating shaft;
272: second rotating shaft; 280: first unlocking assembly; 281: first unlocking member;
2811: first driving surface; 282: second unlocking member; 2822: second driving surface;
283: first operation member; 2831: first operation end; 290: second unlocking assembly;
292: second operation member; 2922: second operation end; 293: third unlocking member;
2931: first end; 2932: second end; 294: fourth unlocking member;
2954: fourth rotating shaft; 2963: third reset elastic member; 311: first auxiliary member;
312: second auxiliary member; 313: third auxiliary member; 321: first magnetic member;
323: third magnetic member; 324: fourth magnetic member; 331: first limiting member;
332: second limiting member; 341: first anti-reverse member; 342: second anti-reverse member;
350: rotation assembly; 361: first adapter; 362: second adapter; and
370: auxiliary charging interface.

### DESCRIPTION OF EMBODIMENTS

Terms used in implementations of this application are merely used to explain specific embodiments of this application, but are not intended to limit this application.

In a related technology, a tablet electronic device may be mounted on the back of a front seat through a tablet support. The seat may include a backrest, a headrest, and two connecting rods between the backrest and the headrest. The tablet support may include two clamping hooks facing a side of the seat, one clamping hook is correspondingly sleeved on an outer periphery of one connecting rod, and the tablet support is mounted on the back of the seat through clamping force of the clamping hooks on the connecting rods. A mounting part may be disposed on a side that is of the tablet support and that faces away from the seat, and the mounting part is configured to mount the tablet electronic device.

However, the tablet support has only a function of mounting the tablet electronic device, but does not have a function of charging the tablet electronic device. When the tablet electronic device mounted on the tablet support needs to be charged, one end of an open wire needs to be electrically connected to a charging interface at an operation desk, a central handrail, or the like of a vehicle, and the other end of the open wire is electrically connected to the tablet electronic device. A distance between the charging interface and the tablet electronic device is long. Consequently, the open wire between the tablet electronic device and the charging interface is long and disordered, posing safety hazards and affecting visual experience of a user.

Based on the foregoing problems, embodiments of this application provide a support. The support is configured to be electrically connected to a bearing member, the bearing member may be configured to mount an electronic device, and the bearing member may be configured to be electrically connected to the electronic device. The support may include a first support member, a second support member, and a first conductive contact, and the first support member is configured to be inserted into the bearing member, so that a connection between the first support member and the bearing member is simple and convenient, thereby simplifying mounting and removal procedures of the user. The first conductive contact is exposed on a side that is of the first support member and that faces away from the second support member, the first conductive contact is configured to be in contact with a second conductive contact of the bearing member, and the support and the bearing member may be electrically connected through the first conductive contact and the second conductive contact (which is equivalent to a contact connection manner). The support may charge the electronic device through the bearing member. Because a distance between the bearing member and the electronic device is short, disordered cabling caused by a long open wire used between the bearing member and the electronic device can be avoided, thereby improving visual experience of the user and improving use safety. In addition, because the bearing member and the support are connected through contacts, no open wire between the bearing member and the support is needed. This further improves visual experience of the user and improves use safety.

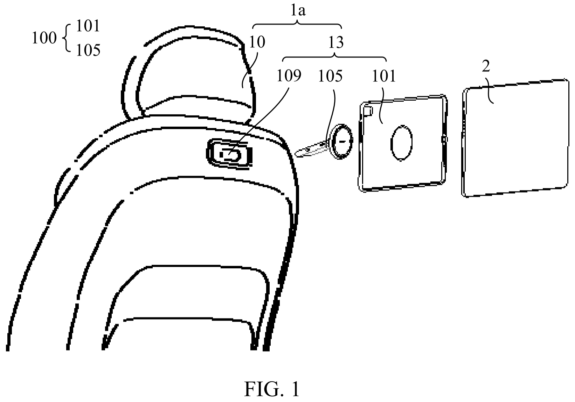

The following describes a charging system 13 provided in embodiments of this application with reference to FIG. 1 to FIG. 38.

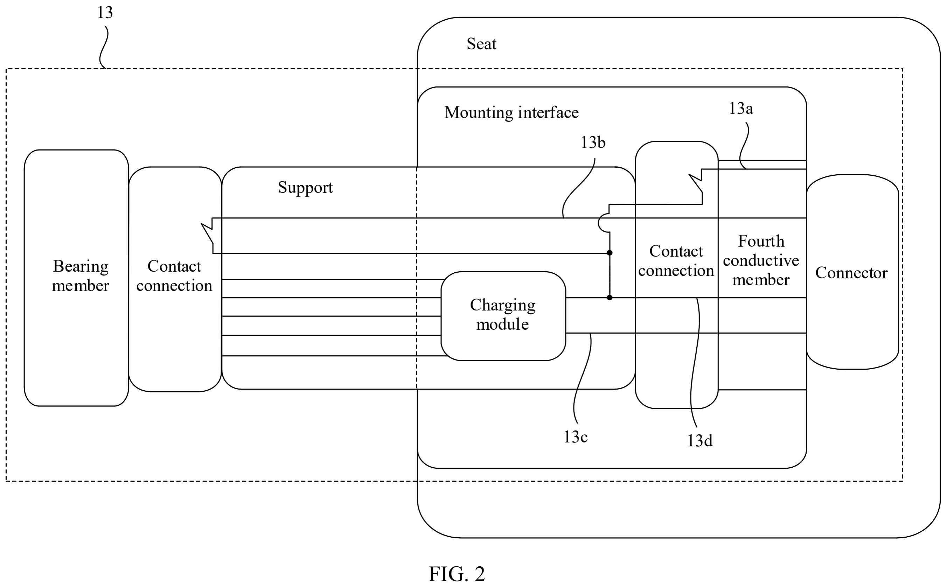

Refer to FIG. 1 and FIG. 2. The charging system 13 may include a mounting interface 109, a support 105, and a bearing member 101. The mounting interface 109 may be configured to be electrically connected to an external power supply. The mounting interface 109 may be electrically connected to the support 105, the support 105 may be electrically connected to the bearing member 101, and the bearing member 101 may be electrically connected to a to-be-borne member. The external power supply supplies electric energy to the to-be-borne member sequentially through the mounting interface 109, the support 105, and the bearing member 101.

In some embodiments, the to-be-borne member may be an electronic device 2 or another device that does not use electricity. Embodiments of this application are described by using the electronic device 2 as an example. The electronic device 2 may include but is not limited to a smartphone, a smartwatch, a smart band, a stylus, a headset, a tablet computer, an e-reader, a notebook computer, a camera, a vehicle-mounted device, a mobile charger (which may also be referred to as a mobile power supply or a mobile power supply), a wearable device (for example, smart glasses or smart jewelry), a makeup mirror, a light, a camera lens, a virtual reality (virtual reality, VR for short) terminal device, an augmented reality (augmented reality, AR for short) terminal device, a smart home device (such as a smart screen and a smart TV), and the like.

In some embodiments, the charging system 13 may be applied to scenarios such as a vehicle, an airplane, a ship, an office, a boarding lounge, a waiting room, a hotel, a restaurant, and outdoor charging. Embodiments of this application are described by using an example in which the charging system 13 is applied to a vehicle. A vehicle 1 may include but is not limited to an electric vehicle (electric vehicle, EV for short), a hybrid electric vehicle (hybrid electric vehicle, HEV for short), a range extended electric vehicle (range extend electric vehicle, REEV for short), a plug-in hybrid electric vehicle (plug-in hybrid electric vehicle, PHEV for short), a fuel cell vehicle, a fuel vehicle, and the like.

Embodiments of this application are described by using an example in which the charging system 13 is applied to an electric vehicle.

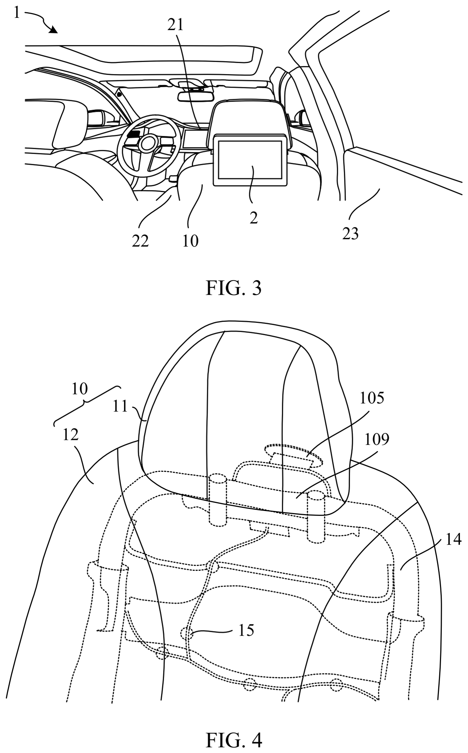

In some embodiments, the vehicle 1 (FIG. 3) may include a housing, the housing is an external envelope of the vehicle 1, and the housing may protect the vehicle 1. The vehicle 1 may include a steering wheel, and a driver may control a traveling direction of the vehicle 1 by using the steering wheel. The vehicle 1 may include an engine, a brake, an accelerator, wheels, and the like, to implement normal driving of the vehicle 1. The vehicle 1 may include a battery (equivalent to an external power supply) located in the housing, the battery may be electrically connected to the engine, and the battery may provide electric energy for the engine of the vehicle 1. The engine converts electric energy into mechanical energy, to provide kinetic energy for the vehicle 1 and drive the wheels to rotate, so that the vehicle 1 can run normally.

For example, refer to FIG. 3 and FIG. 4. The mounting interface 109 may be mounted on at least one of a control console 21, a seat 10, an in-door handrail, a central handrail 22, a door trim panel 23, and a trunk of the vehicle 1.

Embodiments of this application are described by using an example in which the mounting interface 109 is mounted on the seat 10.

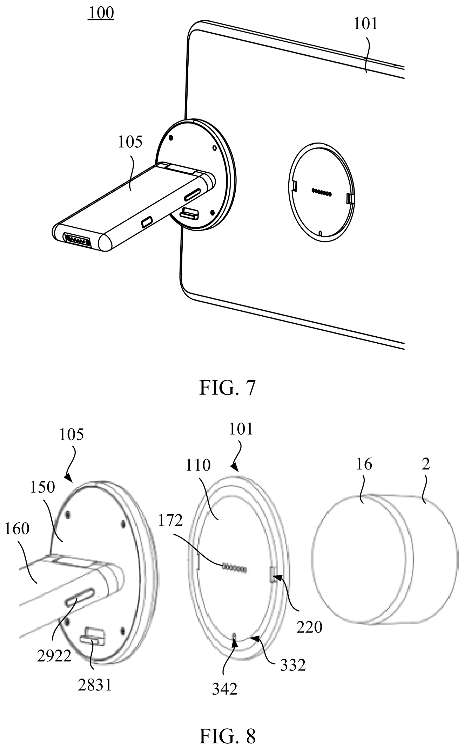

Refer to FIG. 1 and FIG. 7. The seat 10, the mounting interface 109, the support 105, and the bearing member 101 may jointly form a seat assembly 1a, and the support 105 and the bearing member 101 may jointly form a support assembly 100.

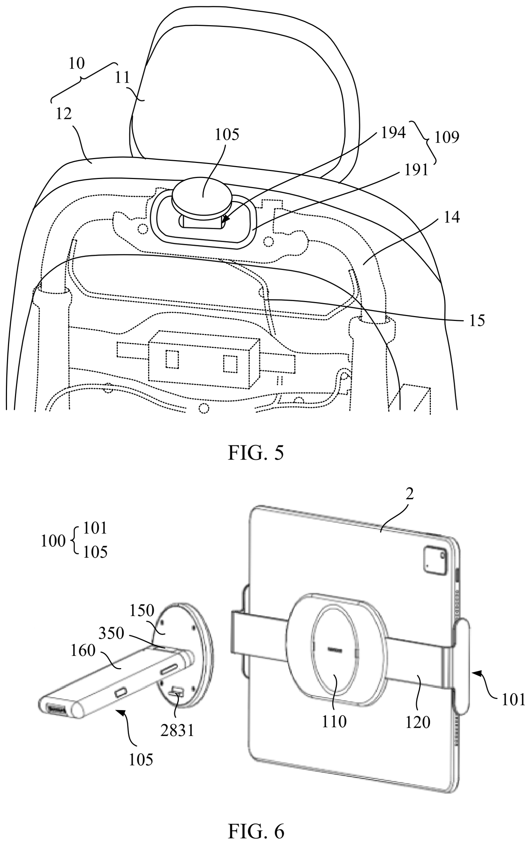

Refer to FIG. 4 and FIG. 5. The seat 10 may include a backrest 12 and a headrest 11 that are connected, and the mounting interface 109 may be disposed on the backrest 12 and/or the headrest 11. In an implementation in which the mounting interface 109 is disposed on the backrest 12, the mounting interface 109 may be mounted on a seat frame 14 in the backrest 12. For example, the mounting interface 109 may be mounted on the seat frame 14 through screws. The mounting interface 109 may be electrically connected to the battery through a cable 15, and the cable 15 may be disposed in the seat 10, to avoid safety hazards, disordered cabling, and the like that are caused by exposing the cable 15 outside the seat 10.

Refer to FIG. 5. The mounting interface 109 may include a mounting member 191, and at least a part of the mounting member 191 may be located in the seat 10. The mounting member 191 may have a mounting groove 194, and an opening of the mounting groove 194 may be exposed to the outside of the seat 10, so that the support 105 of the support assembly 100 is inserted into the mounting interface 109. Compared with a related technology in which the support assembly 100 is hooked onto the seat 10, the insertion manner is simpler and more convenient, and can simplify mounting and removal procedures, shorten mounting time, reduce mounting difficulty, and improve user experience. For example, the opening of the mounting groove 194 may be located on the back, front, side, or the like of the seat 10. A side that is of the seat 10 and on which the user sits is the front of the seat 10, and a side facing away from the front is the back.

An implementation in which the opening of the mounting groove 194 is located on the back of the seat 10 can avoid affecting a user's ride when the support assembly 100 is used. In addition, when the mounting interface 109 is disposed on the front seat of the vehicle 1, it may also be convenient for a user in the back seat to use the mounting interface 109, so that the user in the back seat can conveniently use the electronic device 2, and fatigue and inconvenience caused by holding the electronic device 2 by the user in the back seat are avoided. For example, refer to FIG. 5 and FIG. 6. The user may insert the second support member 160 (FIG. 6) of the support 105 into the back of the seat 10 with the mounting interface 109, so that the support 105 is electrically connected to the mounting interface 109. Then, the bearing member 101 is mounted on the first support member 150 (FIG. 6), so that the first support member 150 is electrically connected to the bearing member 101. Then, the electronic device 2 is mounted on the bearing member 101, so that the electronic device 2 is mounted on the back of the seat 10, and the electronic device 2 can be further charged.

The following describes the support assembly 100 provided in embodiments of this application.

Refer to FIG. 6 and FIG. 7. The support assembly 100 is configured to mount the electronic device 2. The support assembly 100 may include the support 105 and the bearing member 101. The support 105 is detachably connected to the bearing member 101, so that it is convenient to replace a different bearing member 101 on the support 105. This improves availability of the support 105, and reduces a volume occupied by the support assembly 100 when the support assembly 100 is stored. A detachable connection provided in embodiments of this application includes any one or more of manners such as insertion, threaded connection, magnetic suction, and an adhesive buckle connection. For example, when the support 105 and the bearing member 101 are detachably connected in a plurality of manners, stability of a connection between the support 105 and the bearing member 101 can be improved, and shaking between the support 105 and the bearing member 101 in a traveling process of the vehicle 1 can be reduced.

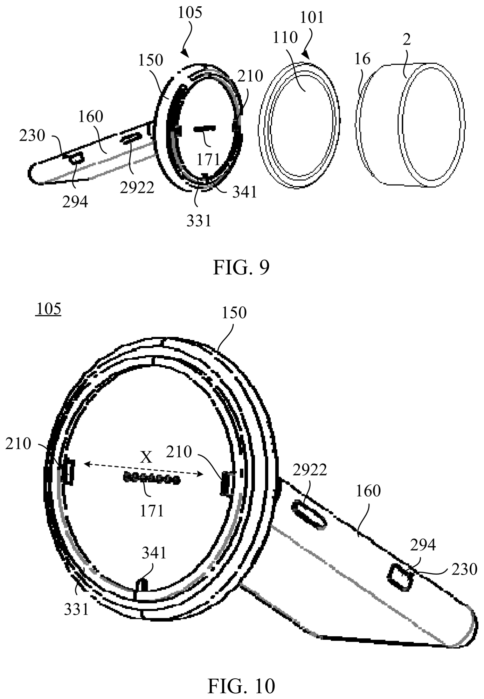

Refer to FIG. 5 and FIG. 6. The mounting interface 109 may be configured to mount the support 105, and the bearing member 101 may be configured to mount the electronic device 2. In some examples, the bearing member 101 is detachably connected to the electronic device 2, so that a user can easily disassemble the electronic device 2 from the bearing member 101, and different use requirements of the user for the electronic device 2 can be met. In addition, it is convenient to replace a different electronic device 2 on the bearing member 101, thereby improving availability of the bearing member 101. In some other examples, the bearing member 101 may be fastened to the electronic device 2, so that stability of a connection between the bearing member 101 and the electronic device 2 can be improved, and shaking between the bearing member 101 and the electronic device 2 in a traveling process of the vehicle can be better prevented. For example, refer to FIG. 8 and FIG. 9. The bearing member 101 may be connected to the electronic device 2 by using a bonding member 16 (for example, a traceless adhesive). A connection manner is simple and convenient, and can further simplify structures of the bearing member 101 and the electronic device 2, to reduce costs and reduce volumes of the bearing member 101 and the electronic device 2.

Refer to FIG. 5 and FIG. 6. The support 105 may include a first support member 150 and a second support member 160 that are connected to each other, the second support member 160 may be located on a side of the first support member 150 and is connected to the first support member 150, and a side that is of the first support member 150 and that faces away from the second support member 160 may be configured to be connected to the bearing member 101. An end that is of the second support member 160 and that is away from the first support member 150 may be configured to be inserted into the mounting groove 194 of the mounting interface 109. The bearing member 101 may include a fitting member 110. A side of the fitting member 110 may be configured to face the support 105 and is connected to the support 105. A side that is of the fitting member 110 and that faces away from the support 105 may be configured to face the electronic device 2. The fitting member 110 may be spaced from, in contact with, detachably connected to, or fastened to (for example, connected by using the bonding member 16) the electronic device 2.

In some examples, the first support member 150 and the second support member 160 may be rotatably connected to each other. For example, the first support member 150 and the second support member 160 may be rotatably connected to each other by using a rotation assembly 350, so that a pitch angle of the second support member 160 can be adjusted. After the electronic device 2 is mounted on the bearing member 101, the pitch angle of the second support member 160 is adjusted, to adjust a pitch angle of the bearing member 101 and a pitch angle of the electronic device 2, so as to meet requirements of users with different heights in the back seat for adjusting an angle of the electronic device 2. In some other examples, the first support member 150 may alternatively be fastened to the second support member 160.

The following describes an electrical connection between the support 105 and the bearing member 101 provided in embodiments of this application.

Refer to FIG. 8 to FIG. 10. The support 105 may include a first conductive contact 171, and at least a part of the first conductive contact 171 may be exposed on a side that is of the first support member 150 and that faces away from the second support member 160. The bearing member 101 may include a second conductive contact 172, at least a part of the second conductive contact 172 may be exposed on a side that is of the fitting member 110 and that faces the support 105, and the first conductive contact 171 is in contact with the second conductive contact 172, to implement the electrical connection between the support 105 and the bearing member 101. This is equivalent to that the bearing member 101 and the support 105 are connected to each other through contacts, so that no open wire between the bearing member 101 and the support 105 is needed. This improves visual experience of the user and improves use safety. In addition, the support 105 may charge the electronic device 2 through the bearing member 101, and a short distance between the bearing member 101 and the electronic device 2 can avoid disordered cabling caused by a long open wire used between the bearing member 101 and the electronic device 2. This improves visual experience of the user and improves use safety.

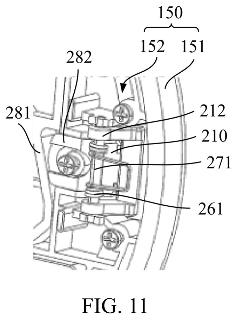

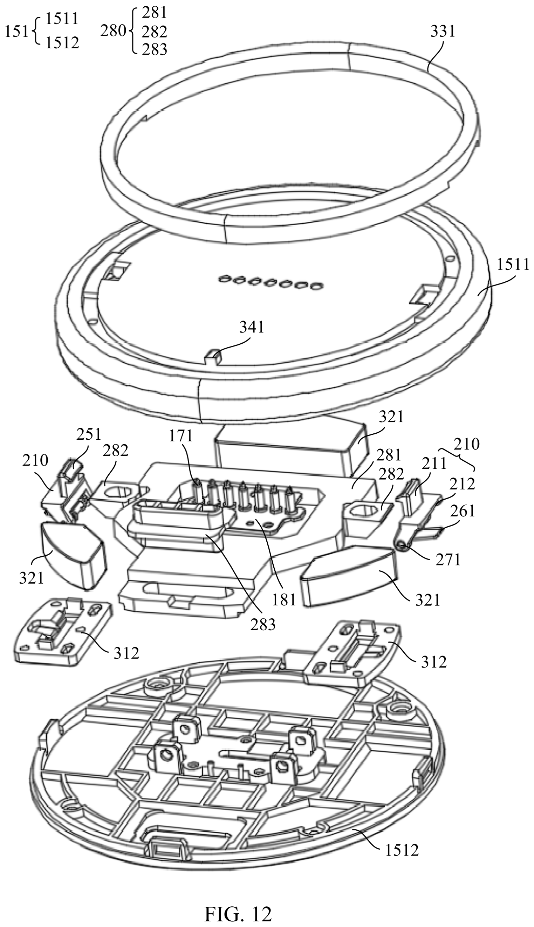

Refer to FIG. 11 and FIG. 12. In some embodiments, the first support member 150 may include a first support housing 151, the first support housing 151 has a first support cavity 152, and one end of the first conductive contact 171 may be exposed on the side that is of the first support member 150 and that faces away from the second support member 160, so that the first conductive contact 171 may be in contact with the second conductive contact 172. The other end of the first conductive contact 171 may be located in the first support cavity 152, so that the other end of the first conductive contact 171 is protected. For example, the first support housing 151 may include a first housing wall 1511 and a second housing wall 1512 that are engaged to each other, the first support cavity 152 is located between the first housing wall 1511 and the second housing wall 1512, and the first housing wall 1511 may be located on a side that is of the second housing wall 1512 and that faces away from the second support member 160. A through hole may be disposed on the first housing wall, and the first conductive contact 171 may be exposed to the outside of the first support housing 151 through the through hole.

In embodiments of this application, that the first conductive contact 171 is "exposed" to the outside of the first support housing 151 may mean that the first conductive contact 171 protrudes from the first support housing 151, the first conductive contact 171 may be recessed in the first support housing 151, or the first conductive contact 171 is flush with an outer surface of the first support housing 151. In a recessing or flushing implementation, there is a groove on an outer side of the first support housing 151, and the first conductive contact 171 may be located in the groove. Alternatively, there is a through hole on a housing wall of the first support housing 151, at least a part of the first conductive contact 171 may be located in the first support cavity 152, and the first conductive contact 171 may be observed from the outside of the first support housing 151 through the through hole, or may be accessed from the outside of the first support housing 151 through the through hole. "Exposing" of another mechanical member provided in embodiments of this application is similar to this. Details are not described again.

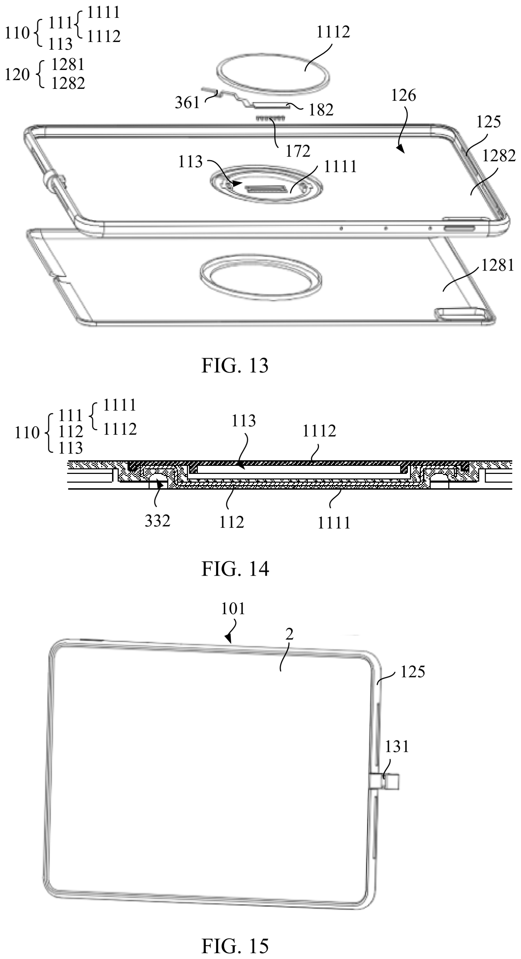

Refer to FIG. 13 and FIG. 14. In some embodiments, the fitting member 110 may include a fitting housing 111, the fitting housing 111 has a fitting cavity 113, and one end of the second conductive contact 172 may be exposed on a side that is of the fitting member 110 and that faces the first support member 150, so that the second conductive contact 172 is in contact with the first conductive contact 171. The other end of the second conductive contact 172 may be located in the fitting cavity 113, so that the other end of the second conductive contact 172 is protected. For example, the fitting housing 111 may include a first fitting housing 1111 and a second fitting housing 1112 that are engaged to each other, and the fitting cavity 113 is formed between the first fitting housing 1111 and the second fitting housing 1112. The first fitting housing 1111 may be located on a side that is of the second fitting housing 1112 and that faces the first support member 150. The fitting member 110 may further include a reinforcement housing 112, and the reinforcement housing 112 may be connected to the first fitting housing 1111. The reinforcement housing 112 may be configured to improve mechanical strength of the first fitting housing 1111, to better protect a mechanical member in the fitting cavity 113, and avoid squeezing the mechanical member in the fitting cavity 113 in a process of mounting the first support member 150 and the fitting member 110. For example, the first fitting housing 1111 may be wrapped around at least a part of the outside of the reinforcement housing 112.

For example, one end that is of the first conductive contact 171 and that is close to the fitting member 110 may protrude from the outer surface of the first support housing 151, and one end that is of the second conductive contact 172 and that is close to the first support member 150 may be recessed on an outer surface of the fitting housing 111. When the first conductive contact 171 is interconnected with the second conductive contact 172, a recess in which the second conductive contact 172 is located may limit the first conductive contact 171, thereby improving contact stability between the first conductive contact 171 and the second conductive contact 172. Alternatively, the end that is of the first conductive contact 171 and that is close to the fitting member 110 may be recessed on the outer surface of the first support housing 151, and the end that is of the second conductive contact 172 and that is close to the first support member 150 may protrude from the outer surface of the fitting housing 111. A principle thereof has been described. Details are not described again.

For example, refer to FIG. 12 and FIG. 13. A first conductive member 181 may be disposed in the first support cavity 152, there may be a plurality of first conductive contacts 171, and the plurality of first conductive contacts 171 may be spaced apart on the first conductive member 181. A second conductive member 182 may be disposed in the fitting cavity 113, there may be a plurality of second conductive contacts 172, and the plurality of second conductive contacts 172 may be spaced apart on the second conductive member 182. The first conductive contacts 171 and the second conductive contacts 172 may be disposed in a one-to-one correspondence.

The following describes a clamping member 120 provided in embodiments of this application.

Refer to FIG. 13, FIG. 15, and FIG. 16. The clamping member 120 may be located on at least a part of an outer periphery of the fitting member 110, so that the bearing member 101 provides good support for the electronic device 2 with a large area. In addition, some other mechanical members of the bearing member 101 may be mounted on the clamping member 120, so that a thickness of the fitting member 110 can be reduced, thereby facilitating lightening and thinning of the bearing member 101. The clamping member 120 may include a clamping part 125 away from the fitting member 110, the clamping part 125 may extend in a direction away from the support 105, and the clamping part 125 may be configured to abut against at least a part of an outer peripheral wall of the electronic device 2. In this way, the electronic device 2 is clamped on the bearing member 101.

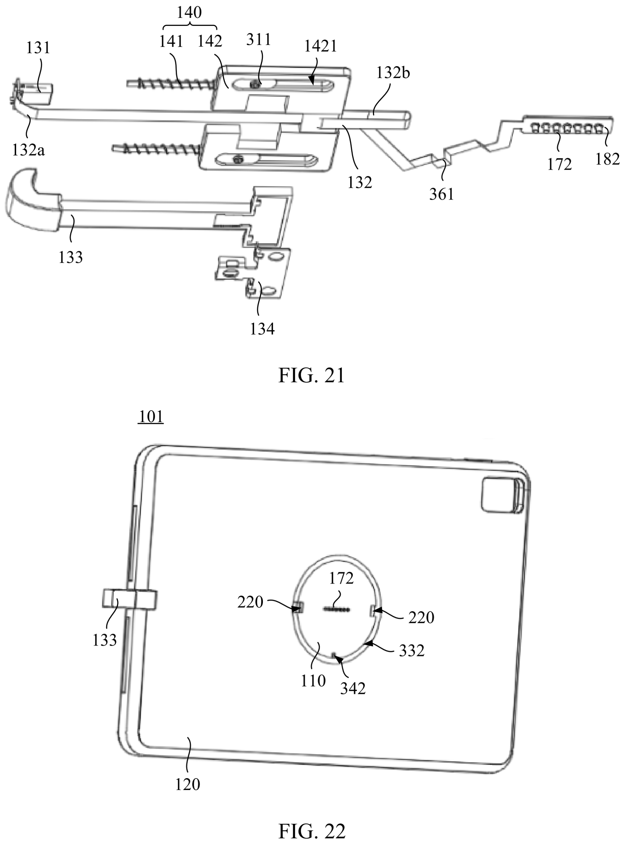

In some embodiments, refer to FIG. 13 and FIG. 15. The clamping member 120 may be disposed around an outer periphery of the fitting member 110, and the clamping member 120 may be annularly disposed around the outer periphery of the fitting member 110. The clamping member 120 and the fitting member 110 jointly form an accommodation groove 126 facing away from the support 105, and the accommodation groove 126 may be configured to accommodate the electronic device 2. The clamping part 125 may form a side wall of the accommodation groove 126, and the fitting member 110 and a remaining part of the clamping member 120 other than the clamping part 125 jointly form a bottom wall of the accommodation groove 126. For example, an area of an opening of the accommodation groove 126 may be less than an area of the electronic device 2. After the electronic device 2 is placed in the accommodation groove 126, the opening of the accommodation groove 126 can better prevent the electronic device 2 from falling off the bearing member 101. At least one of the clamping part 125 and the clamping member 120 between the clamping part 125 and the fitting member 110 may be provided with a through hole and/or a notch, to expose an operation button, a sound outlet hole, a camera apparatus, and the like on the electronic device 2. In addition, a movable end 132a (FIG. 22) of a charging connector 132 may be further configured to pass through the through hole and/or the notch, to implement telescopic movement of the movable end 132a relative to the clamping part 125.

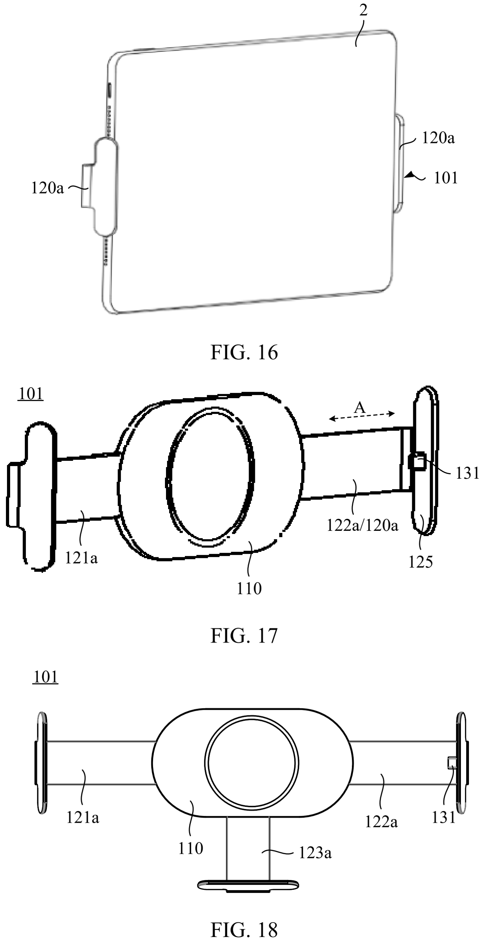

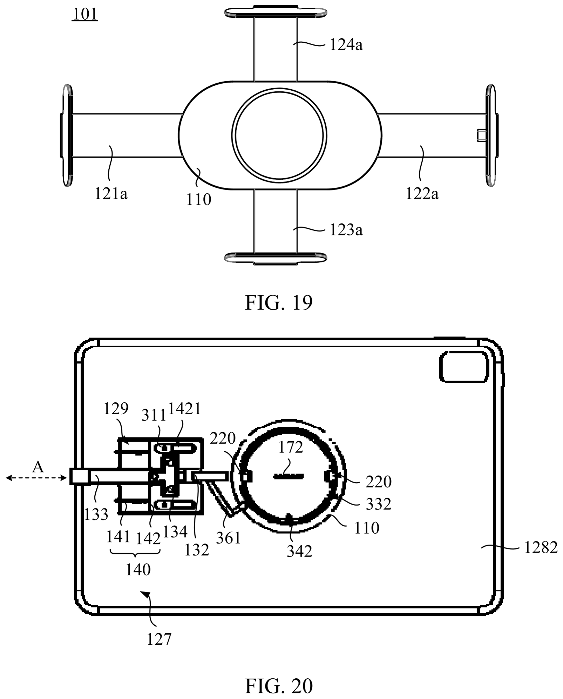

Refer to FIG. 16 to FIG. 19. In some embodiments, the clamping member 120 may include a plurality of clamping sub-members 120a, and the plurality of clamping sub-members 120a may be spaced apart in a circumferential direction of the fitting member 110. Because there is a gap between two adjacent clamping sub-members 120a, an overall weight of the clamping member 120 can be reduced. There may be two, three, four, five, or more clamping sub-members 120a. In some examples, refer to FIG. 17. The plurality of clamping sub-members 120a may include a first clamping sub-member 121a and a second clamping sub-member 122a, the first clamping sub-member 121a and the second clamping sub-member 122a may be respectively located on two opposite sides of the fitting member 110, and a clamping part 125 of the first clamping sub-member 121a and a clamping part 125 of the second clamping sub-member 122a may be respectively clamped on two opposite sides of the electronic device 2. For example, the clamping part 125 of the first clamping sub-member 121a and the clamping part 125 of the second clamping sub-member 122a may be located on two opposite sides of the electronic device 2 in a horizontal direction, a vertical direction, or any other direction. In some other examples, refer to FIG. 18. The plurality of clamping sub-members 120a may further include a third clamping sub-member 123a, and the third clamping sub-member 123a may be located between the first clamping sub-member 121a and the second clamping sub-member 122a. For example, the clamping part 125 of the first clamping sub-member 121a and the clamping part 125 of the second clamping sub-member 122a may be located on two sides of the electronic device 2 in the horizontal direction, and the third clamping sub-member 123a may be located at the bottom of the electronic device 2, so that the electronic device 2 can be well supported, and stress on a charging interface 131 can be further alleviated. In some other examples, refer to FIG. 19. The plurality of clamping sub-members 120a may further include a fourth clamping sub-member 124a, and the third clamping sub-member 123a and the fourth clamping sub-member 124a may be respectively located on two opposite sides of the fitting member 110. For example, a direction from the third clamping sub-member 123a to the fourth clamping sub-member 124a may be perpendicular to a direction from the first clamping sub-member 121a to the second clamping sub-member 122a, and the clamping parts 125 may clamp the electronic device 2 in an all-round manner in four directions.

The following describes the charging interface 131 and the charging connector 132 on the bearing member 101 provided in embodiments of this application.

Refer to FIG. 20 and FIG. 21. In some embodiments, the bearing member 101 may further include the charging interface 131 and the retractable charging connector 132, and the charging interface 131 may be configured to be electrically connected to the electronic device 2. At least a part of the charging connector 132 may be located in the clamping member 120, to protect the charging connector 132. Two ends of extension directions of the charging connector 132 may respectively include a connection end 132b and the movable end 132a, the connection end 132b may be electrically connected to the second conductive contact 172, and the movable end 132a may be connected to the charging interface 131, so that the charging interface 131 may be electrically connected to the second conductive contact 172 through the charging connector 132.

For example, the connection end 132b of the charging connector 132 may be directly connected to the second conductive member 182, so that a structure of the bearing member 101 can be simplified. Alternatively, the connection end 132b of the charging connector 132 may be connected to the second conductive member 182 through a first adapter 361. For example, the first adapter 361 may be connected to the fitting member 110 and/or the clamping member 120, and is static relative to the fitting member 110 and/or the clamping member 120, to prevent the charging connector 132 from pulling the second conductive member 182 in a retraction process.

The movable end 132a may move in a direction close to or away from the fitting member 110, to drive the charging interface 131 to move in the direction close to or away from the fitting member 110. When the charging interface 131 moves in the direction away from the fitting member 110, the charging interface 131 extends out of the bearing member 101, so that the charging interface 131 can be separated from a fitting interface of the electronic device 2, to disconnect an electrical connection between the charging interface 131 and the electronic device 2. When the charging interface 131 moves in the direction close to the fitting member 110, the charging interface 131 is retracted to the bearing member 101, so that the charging interface 131 can be inserted into the fitting interface of the electronic device 2, to electrically connect the charging interface 131 to the electronic device 2, and charge the electronic device 2. At least a part of the charging interface 131 may be located on a side that is of the clamping part 125 and that faces the fitting member 110, so that the charging interface 131 is electrically connected to the electronic device 2. The second conductive contact 172 is electrically connected to the fitting interface of the electronic device 2 sequentially through the second conductive member 182, the charging connector 132, and the charging interface 131.

For example, at least a part of the charging connector 132 may be in a bent state, a folded state, a wound state, or the like, so that the charging connector 132 is retractable.

The following describes relative static between the clamping member 120 and the fitting member 110 provided in embodiments of this application, and retractability of the charging interface 131.

Refer to FIG. 20 and FIG. 21. The movable end 132a may move in a direction close to or away from the clamping member 120, and the movable end 132a may drive the charging interface 131 to move in a direction close to or away from the electronic device 2, to disconnect/connect the charging interface 131 from/to the fitting interface of the electronic device 2. An arrow A in FIG. 20 shows a telescopic direction of the charging interface 131.

In some examples, the user may apply external force to the movable end 132a, so that the movable end 132a moves in the direction away from the clamping member 120, and the user may alternatively apply external force to the movable end 132a, so that the movable end 132a moves in the direction close to the clamping member 120. In this way, the charging interface 131 is disconnected from/connected to the fitting interface of the electronic device 2.

In some other examples, a reset assembly 140 may drive the movable end 132a to move in the direction close to the clamping member 120, so that the movable end 132a automatically retracts back to the bearing member 101 under an action of the reset assembly 140, to implement automatic interconnection between the charging interface 131 and the fitting interface of the electronic device 2. This can simplify an operation and improve user experience, and prevent the movable end 132a from being in an extended state for a long time because the user does not perform an operation, thereby avoiding damage to the charging interface 131. When the charging interface 131 is retracted back to the clamping member 120, there can be no open wire interference, thereby implementing imperceptible charging and improving visual experience of the user.

Refer to FIG. 13 and FIG. 20. The clamping member 120 may have a clamping cavity 127, and the reset assembly 140 may be located in the clamping cavity 127, to protect the reset assembly 140. The clamping member 120 may include a clamping housing wrapped outside the clamping cavity 127, and the clamping housing may include a first clamping housing 1281 and a second clamping housing 1282 that are engaged to each other. This is equivalent to forming the clamping cavity 127 between the first clamping housing 1281 and the second clamping housing 1282. The reset assembly 140 may be connected to the movable end 132a, to drive the movable end 132a to move in the direction close to the clamping member 120, so as to drive the charging interface 131 to move in the direction close to the clamping member 120, to form a retracted state of the charging interface 131. A state (an extended state or a retracted state) of the movable end 132a is also a state of the charging interface 131.

For example, refer to FIG. 20 and FIG. 21. The reset assembly 140 may include a reset member 142 and a first reset elastic member 141. The reset member 142 may be movably connected to the clamping member 120 in a telescopic direction of the movable end 132a. The reset member 142 may be connected to the movable end 132a, and when the reset member 142 moves in the direction close to the fitting member 110, the reset member 142 may drive the movable end 132a to move in the direction close to the fitting member 110. When the reset member 142 moves in the direction away from the fitting member 110, the reset member 142 may drive the movable end 132a to move in the direction away from the fitting member 110, to implement extension and retraction of the movable end 132a (which is equivalent to the charging interface 131). The first reset elastic member 141 may be separately connected to the reset member 142 and a cavity wall of the clamping cavity 127, and the reset member 142 may drive, under elastic force of the first reset elastic member 141, the movable end 132a to move in the direction close to the clamping member 120, so that the charging interface 131 is retracted back to the bearing member 101. There may be one, two, three, four, five, or more first reset elastic members 141. For example, there are two first reset elastic members 141, the two first reset elastic members 141 may be spaced apart in a direction perpendicular to the telescopic direction of the movable end 132a, and the two first reset elastic members 141 exert balanced force on the reset member 142. This can improve movement stability of the reset member 142. In addition, a quantity of first reset elastic members 141 is small, so that a structure of the bearing member 101 can be simplified, and costs can be reduced.

The first reset elastic member 141 may be an elastic member formed by a tension spring, a compression spring, a torsion spring, a spring plate, or another elastic material, to provide the reset member 142 with pushing force or pulling force toward the fitting member 110, so that the reset member 142 moves toward the fitting member 110. Another elastic member provided in embodiments of this application may alternatively be an elastic member formed by a tension spring, a compression spring, a torsion spring, a spring plate, or another elastic material. A principle of the another elastic member is similar to that of the first reset elastic member 141. Details are not described again.

For example, refer to FIG. 20. A sliding groove 129 may be formed on the cavity wall of the clamping cavity 127, the reset member 142 may be located in the sliding groove 129 and slide along the sliding groove 129, the sliding groove 129 may limit the reset member 142 and limit a movement path of the reset member 142, to avoid misplacement of the reset member 142 in a subsequent assembly process, reduce assembly difficulty of the reset member 142, and improve assembly precision of the reset member 142. When the charging interface 131 is in the retracted state, at least a part of a groove wall surface of the sliding groove 129 may abut against a side that is of the reset member 142 and that faces the fitting member 110. This can prevent the reset member 142 from continuing to move toward the fitting member 110 and exerting excessive force on the charging interface 131, and protect the charging interface 131.

For example, refer to FIG. 20. A first auxiliary member 311 is disposed in the clamping cavity 127, a hollow part 1421 may be disposed on the reset member 142, the hollow part 1421 may extend in the telescopic direction of the movable end 132a, one end of the first auxiliary member 311 is connected to the clamping member 120, and the other end of the first auxiliary member 311 extends into the hollow part 1421. Through fitting between the hollow part 1421 and the first auxiliary member 311, the reset member 142 may be limited, and the movement path of the reset member 142 may be limited, to avoid misplacement of the reset member 142 in the subsequent assembly process, reduce assembly difficulty of the reset member 142, and improve assembly precision of the reset member 142. For example, one end of the first auxiliary member 311 may be connected to the second clamping housing 1282, and the other end of the first auxiliary member 311 abuts against a side that is of the reset member 142 and that faces away from the second clamping housing 1282, so that the reset member 142 may be further limited between the second clamping housing 1282 and the other end of the first auxiliary member 311, to avoid misplacement of the reset member 142 in the subsequent assembly process, reduce assembly difficulty of the reset member 142, and improve assembly precision of the reset member 142. There may be one, two, three, four, or more first auxiliary members 311, and the first auxiliary members 311 and hollow parts 1421 are disposed in a one-to-one correspondence. For example, there may be two first auxiliary members 311, and the two first auxiliary members 311 may be spaced apart in the direction perpendicular to the telescopic direction of the movable end 132a. When the charging interface 131 is in the retracted state, a side that is of the first auxiliary member 311 and that faces away from the fitting member 110 may abut against the reset member 142 at the hollow part 1421. This can prevent the reset member 142 from continuing to move toward the fitting member 110 and exerting excessive force on the charging interface 131, and protect the charging interface 131.

In an implementation in which the clamping member 120 includes a plurality of clamping sub-members 120a, the clamping sub-members 120a and the fitting member 110 may be relatively static. At least a part of the charging connector 132 is retractably disposed on one clamping sub-member 120a. On the clamping sub-member 120a on which the charging connector 132 is disposed, the movable end 132a moves in a direction close to or away from the clamping sub-member 120a, to drive the charging interface 131 to move in the direction close to or away from the clamping sub-member 120a. In addition, the clamping sub-member 120a on which the charging connector 132 is disposed may have the clamping cavity 127. The reset assembly 140 may be located in the clamping cavity 127 of the clamping sub-member 120a. A principle thereof has been described. Details are not described again.

For example, refer to FIG. 20 and FIG. 21. The bearing member 101 may further include an insulation member 133, and the insulation member 133 may be wrapped outside the movable end 132a, to protect the movable end 132a. In an implementation in which the reset assembly 140 is disposed, an end that is of the insulation member 133 and that is away from the charging interface 131 may abut against the reset member 142, to facilitate disassembly of the charging connector 132, and reduce maintenance difficulty and costs of the charging connector 132. A reinforcement member 134 may be disposed on the insulation member 133, the reinforcement member 134 is located at the end that is of the insulation member 133 and that is away from the charging interface 131, and the reinforcement member 134 can improve mechanical strength of the insulation member 133. This can relieve stress applied by the reset member 142 and the user on the insulation member 133 and the charging connector 132, protect the charging connector 132, and avoid damage caused by large deformation of the insulation member 133 and the charging connector 132 in a retraction process.

The following describes a movable connection between the clamping member 120 and the fitting member 110 provided in embodiments of this application, and retractability of the charging interface 131.

The clamping member 120 and the fitting member 110 may move relative to each other. For example, the clamping member 120 includes a plurality of clamping sub-members 120a. Refer to FIG. 17. Each clamping sub-member 120a is telescopically connected to the fitting member 110, so that each clamping part 125 moves in the direction close to or away from the fitting member 110. In this way, the clamping member 120 can be configured to clamp electronic devices 2 of different sizes and different models, to improve compatibility and scalability of the bearing member 101. On the clamping sub-member 120a on which the charging connector 132 is disposed, the movable end 132a may be inserted into the clamping sub-member 120a and connected to a clamping part 125 of the clamping sub-member 120a, and the sub-clamping part 125, the movable end 132a, and the charging interface 131 are relatively static. When the clamping sub-member 120a moves in a retractable manner, the clamping part 125 of the clamping sub-member 120a may drive the movable end 132a and the charging interface 131 to move in the direction close to or away from the fitting member 110, so that imperceptible charging can be implemented on electronic devices 2 of different sizes and different models. The charging interface 131 may be connected to the clamping part 125 of the clamping sub-member 120a, to relieve stress between the charging connector 132 and the charging interface 131. When the clamping sub-member 120a moves in the direction away from the fitting member 110, the charging interface 131 moves in a direction away from the electronic device 2, and the charging interface 131 may be separated and disconnected from the electronic device 2. In addition, the electronic device 2 may be further removed from the bearing member 101, to disassemble the electronic device 2. When the clamping sub-member 120a moves in the direction close to the fitting member 110, the charging interface 131 moves in a direction close to the electronic device 2, and the charging interface 131 may be electrically connected to the electronic device 2. In addition, the electronic device 2 may be further mounted on the bearing member 101.

In conclusion, in embodiments of this application, the charging interface 131 is disposed on the bearing member 101 in a retractable manner, and the electronic device 2 does not need to be charged by using an additional open wire. In this way, on a premise of wired charging, imperceptible charging can be implemented, a sense of accessories is weakened, interference from the open wire is visually eliminated, aesthetic appearance of the support assembly 100 is ensured, and charging experience is improved. Compared with wireless charging, embodiments of this application have higher charging efficiency. Compared with using a long open wire for charging, embodiments of this application are neater and more beautiful, and can further reduce safety hazards. When the user gets off the vehicle, the user may remove the bearing member 101 and the electronic device 2 from the support 105 as a whole. When the electronic device 2 needs to be charged, the bearing member 101 and the electronic device 2 do not need to be separated, only the charging interface 131 needs to be pulled out of the electronic device 2, and the electronic device 2 may be charged by using another charger. For example, the bearing member 101 may form a protective case. After getting off the vehicle, the user may still use the bearing member 101 to protect the electronic device 2, thereby improving utilization of the bearing member 101.

In some embodiments, the charging interface 131 and/or the charging connector 132 may be disposed on the fitting member 110.

In some embodiments, power may be further transmitted between the bearing member 101 and the electronic device 2 in a wireless manner. For example, a first coil may be disposed on the bearing member 101, a second coil may be disposed on the electronic device 2, and the first coil and the second coil may be configured to implement energy coupling.

The following describes insertion and locking of the support 105 and the bearing member 101 provided in embodiments of this application.

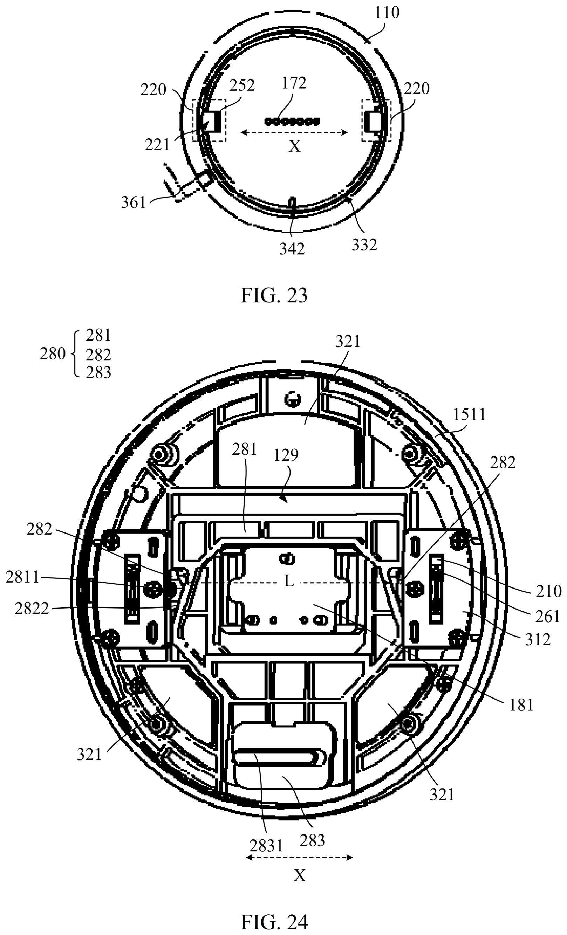

The first support member 150 is inserted into the bearing member 101, so that mounting and removal of the first support member 150 and the bearing member 101 are simple and convenient. In addition, there is no obvious structure that affects aesthetics of the first support member 150 and the bearing member 101. Refer to FIG. 10 and FIG. 12. The support 105 may include two first locking members 210, the two first locking members 210 may be spaced apart on the first support member 150 in a first direction X, and a first locking part 211 of the first locking member 210 may be exposed on the side that is of the first support member 150 and that faces away from the second support member 160. Refer to FIG. 22 and FIG. 23. The bearing member 101 may include two first fitting locking members 220, the first fitting locking members 220 may be spaced apart on the fitting member 110 in the first direction X, and a first fitting locking part 221 of the first fitting locking member 220 is exposed on the side that is of the fitting member 110 and that faces the support 105. The first fitting locking part 221 is inserted into and fits with the first locking part 211, to form a first locked state of the support 105 and the bearing member 101. Insertion directions of the first locking part 211 and the first fitting locking part 221 may be in the first direction X, and the first direction X may be different from a direction from the first support member 150 to the bearing member 101 (which is equivalent to an interconnection direction of the first support member 150 and the bearing member 101). For example, the first direction X may be perpendicular to the direction from the first support member 150 to the bearing member 101, so that locking can be implemented through insertion of the first locking part 211 and the first fitting locking part 221. Because the first locking part 211 and the first fitting locking part 221 implement locking of the first support member 150 and the bearing member 101 through insertion, it is simple and convenient to operate, so that mounting and removal procedures of the user can be simplified, and user experience can be improved.

For example, the first direction X may be a width direction or a length direction of the first support member 150, and the direction from the first support member 150 to the bearing member 101 may be a thickness direction of the first support member 150. A length, a width, and a thickness in embodiments of this application are merely used for ease of description, and do not constitute any limitation on a size or a shape. For example, the width and/or the thickness may be greater than, equal to, or less than the length.

For example, refer to FIG. 12 and FIG. 22. One of the first locking part 211 and the first fitting locking part 221 may be a first locking protrusion, the other of the first locking part 211 and the first fitting locking part 221 may be a first locking groove, and the first locking protrusion is inserted into the first locking groove, to implement the first locked state. For example, the first locking part 211 may be the first locking protrusion, and the first fitting locking part 221 may be the first locking groove. Alternatively, the first locking part 211 may be the first locking groove, and the first fitting locking part 221 may be the first locking protrusion. There is a first preset center between first locking parts 211 of the two first locking members 210. The first preset center may be a center of a connection line between the two first locking parts 211. The center is a virtual center instead of a physical structure. There is a first fitting center between first fitting locking parts 221 of the two first fitting locking members 220. The first fitting center may be a center of a connection line between the two first fitting locking parts 221. The center is a virtual center, instead of a physical structure. The first locking protrusion may be inserted into the first locking groove in a direction toward the first preset center/the first fitting center. For example, insertion directions of the two first locking protrusions face each other. Alternatively, the first locking protrusion may be inserted into the first locking groove in a direction away from the first preset center/the first fitting center. For example, insertion directions of the two first locking protrusions face away from each other.

Refer to FIG. 11. In some embodiments, the support assembly 100 may include a first locking elastic member 261, and the first locking elastic member 261 may be configured to drive one of the first locking part 211 and the first fitting locking part 221 to move close to the other, so that a reliable locked state is formed between the first locking part 211 and the first fitting locking part 221, to ensure that the support 105 and the bearing member 101 are firmly assembled and do not shake, avoid cases such as damage to the bearing member 101 and the electronic device 2 or injury to the user caused by falling of the bearing member 101 and the electronic device 2, and ensure use safety of the electronic device 2. In addition, this can prevent the bearing member 101 from being separated from the support 105 due to a misoperation of the user, and ensure safety and stability.

The first locking elastic member 261 may be disposed on at least one of the first support member 150 and the fitting member 110. In some examples, refer to FIG. 11. The first locking elastic member 261 may be disposed on the first support member 150, the first locking elastic member 261 may be connected to the first locking member 210, and the first locking elastic member 261 may drive the first locking part 211 to move in a direction close to the first fitting locking part 221. In this way, the first locking part 211 and the first fitting locking part 221 are tightly locked to each other, thereby improving reliability of the first locked state. In some other examples, the first locking elastic member 261 may be disposed on the fitting member 110, the first locking elastic member 261 may be connected to the first fitting locking member 220, and the first locking elastic member 261 may drive the first fitting locking part 221 to move in a direction close to the first locking part 211. In this way, the first locking part 211 and the first fitting locking part 221 are tightly locked to each other, thereby improving reliability of the first locked state.

In some embodiments, refer to FIG. 24. The support assembly 100 may include a first unlocking assembly 280. The first locked state between the first locking part 211 and the first fitting locking part 221 may be released by using the first unlocking assembly 280, to separate the support 105 from the bearing member 101. The first unlocking assembly 280 may be configured to drive one of the first locking part 211 and the first fitting locking part 221 to move away from the other, so that the first locking part 211 is detached from the first fitting locking part 221, to form a first unlocked state of the support 105 and the bearing member 101. The first unlocking assembly 280 may be disposed on at least one of the first support member 150 and the fitting member 110. In some examples, refer to FIG. 24. The first unlocking assembly 280 may be disposed on the first support member 150, the first unlocking assembly 280 may be connected to the first locking member 210, and the first unlocking assembly 280 may drive the first locking part 211 to move in a direction away from the first fitting locking part 221, so that the first locking part 211 is detached from the first fitting locking part 221, and the bearing member 101 is separated from the support 105. In some other examples, the first unlocking assembly 280 may be disposed on the first support member 150, the first locking part 211 is the first locking groove, the first fitting locking part 221 is the first locking protrusion, and the first unlocking assembly 280 may push the first locking protrusion out of the first locking groove in a direction from a bottom wall of the first locking groove to an opening of the first locking groove, so that the first locking part 211 is detached from the first fitting locking part 221, and the bearing member 101 is separated from the support 105. In some other examples, the first unlocking assembly 280 may be disposed on the fitting member 110, the first unlocking assembly 280 may be connected to the first fitting locking member 220, and the first unlocking assembly 280 may drive the first fitting locking part 221 to move in a direction away from the first locking part 211, so that the first locking part 211 is detached from the first fitting locking part 221, and the bearing member 101 is separated from the support 105. In some other examples, the first unlocking assembly 280 may be disposed on the fitting member 110, the first locking part 211 is the first locking protrusion, the first fitting locking part 221 is the first locking groove, and the first unlocking assembly 280 may push the first locking protrusion out of the first locking groove in a direction from a bottom wall of the first locking groove to an opening of the first locking groove, so that the first locking part 211 is detached from the first fitting locking part 221, and the bearing member 101 is separated from the support 105.

The support 105 in embodiments of this application may fit with different bearing members 101, to mount electronic devices 2 of different sizes, different models, and different types. When the first unlocking assembly 280 is disposed on the support 105, there is no need to separately disposing the first unlocking assembly 280 on a plurality of bearing members 101, so that costs of the plurality of bearing members 101 can be reduced, and volumes of the plurality of bearing members 101 can be reduced.

The following provides descriptions by using an example in which the first locking elastic member 261 and the first unlocking assembly 280 provided in embodiments of this application are disposed on the first support member 150.

Refer to FIG. 11, FIG. 12, and FIG. 24. The first locking elastic member 261 and at least a part of the first locking member 210 are located in the first support cavity 152. The first locking elastic member 261 may be separately connected to the first support member 150 and the first locking member 210, and the first locking elastic member 261 may be configured to drive the first locking part 211 to move in a direction toward the first fitting locking part 221, to form the first locked state of the support 105 and the bearing member 101. In addition, at least a part of the first unlocking assembly 280 may be located in the first support cavity 152, and a first operation end 2831 of the first unlocking assembly 280 may be exposed outside the first support member 150, so that it is convenient for the user to use the first operation end 2831. In addition, when the user exerts external force to the first operation end 2831, the first operation end 2831 drives the first unlocking assembly 280 to drive one of the first locking part 211 and the first fitting locking part 221 to move away from the other, so that the first locking part 211 is detached from the first fitting locking part 221, to form the first unlocked state of the support 105 and the bearing member 101.

In embodiments of this application, an example in which the first locking part 211 can move is used. The first locking elastic member 261 may drive the first locking part 211 to move in a direction close to the first preset center. Correspondingly, the first unlocking assembly 280 may drive the first locking part 211 to move in a direction away from the first preset center. Alternatively, the first locking elastic member 261 may drive the first locking part 211 to move in the direction away from the first preset center. Correspondingly, the first unlocking assembly 280 may drive the first locking part 211 to move in the direction close to the first preset center.

Embodiments of this application are described by using an example in which the first locking elastic member 261 drives the first locking part 211 to move in the direction close to the first preset center. The first locking part 211 may be the first locking protrusion, the first fitting locking part 221 may be the first locking groove, and the first locking protrusion may be inserted into the first locking groove in a direction toward the first preset center. Alternatively, the first locking part 211 may be the first locking groove, the first fitting locking part 221 may be the first locking protrusion, and the first locking protrusion may be configured to be inserted into the first locking groove in the direction away from the first preset center.

For example, refer to FIG. 11 and FIG. 12. A first rotating shaft 271 may be disposed on the first support member 150, the first locking member 210 includes a first rotating part 212 facing away from the first locking part 211, both the first rotating part 212 and the first rotating shaft 271 may be located in the first support cavity 152, the first rotating part 212 is rotatably connected to the first support member 150 through the first rotating shaft 271, and the first locking part 211 rotates in the direction close to the first preset center under elastic force of the first locking elastic member 261.

For example, refer to FIG. 12 and FIG. 24. A second auxiliary member 312 may be disposed in the first support member 150, the second auxiliary member 312 may be connected to the first housing wall 1511, and the first rotating part 212 and the first locking elastic member 261 may be located between the second auxiliary member 312 and the first housing wall 1511. In this way, the first locking member 210 and the first locking elastic member 261 may be limited between the second auxiliary member 312 and the first housing wall 1511, to avoid misplacement of the first locking member 210 and the first locking elastic member 261 in a subsequent assembly process. In addition, this can prevent the first locking elastic member 261 from affecting opposite engagement of the first housing wall 1511 and the second housing wall 1512, thereby reducing difficulty in engaging the first housing wall 1511 and the second housing wall 1512.

For example, refer to FIG. 12 and FIG. 23. A first inclined surface 251 may be disposed at a side that is of the first locking member 210 and that faces away from the second support member 160, and a second inclined surface 252 may be disposed on a side that is of the first fitting locking member 220 and that faces the support 105. When the first locking part 211 is inserted into the first fitting locking part 221, the first inclined surface 251 is attached to the second inclined surface 252, and plays a guiding role, so that the first locking part 211 is more easily inserted into the first fitting locking part 221. In a process of interconnection between the first support member 150 and the bearing member 101, the first inclined surface 251 and the second inclined surface 252 are in contact with and interact with each other, and the first fitting locking part 221 pushes the first locking part 211 to rotate in the direction away from the first preset center, to generate displacement. After the first inclined surface 251 crosses over the second inclined surface 252, the first locking part 211 and the first fitting locking part 221 implement locking through insertion.

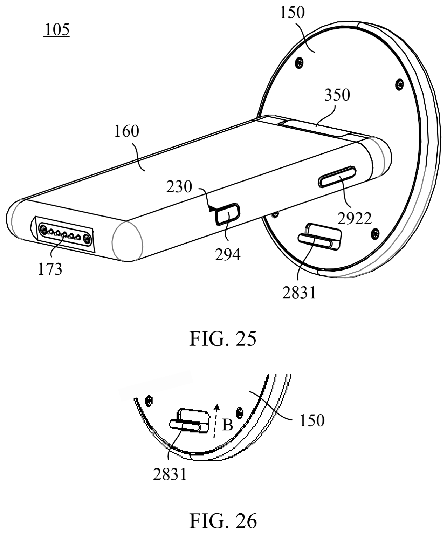

Embodiments of this application are described by using an example in which the first unlocking assembly 280 drives the first locking part 211 to move in the direction away from the first preset center. Refer to FIG. 24 and FIG. 25. The first unlocking assembly 280 may include a first operation member 283, and the first operation member 283 may move toward a first unlocking direction. The first operation end 2831 may be disposed on the first operation member 283, and the first operation end 2831 may be exposed on a side that is of the first support member 150 and that faces the second support member 160. The first unlocking direction may be a movement direction in which the user drives the first operation end 2831, and the first unlocking direction may be perpendicular to the first direction X. The first unlocking assembly 280 may include a first unlocking member 281 and two second unlocking members 282. The first unlocking member 281 and the second unlocking members 282 may all be located in the first support cavity 152, and the second unlocking members 282 may one-to-one correspond to the first locking members 210. The second unlocking members 282 respectively abut against two opposite sides of the first unlocking member 281 in the first direction X, and a side that is of the second unlocking member 282 and that faces away from the first unlocking member 281 may abut against a corresponding first locking member 210. The first operation member 283 may be connected to the first unlocking member 281, the first unlocking member 281 may be movably connected to the first support member 150 in the first unlocking direction, and the second unlocking member 282 may be movably connected to the first support member 150 in the first direction X. The user may drive the first operation end 2831 to move in the first unlocking direction, to drive the first unlocking member 281 to move in the first unlocking direction, the first unlocking member 281 drives the second unlocking member 282 to move in the direction away from the first preset center, and the second unlocking member 282 drives the first locking member 210 to move in the direction away from the first preset center.

Refer to FIG. 24. In the first unlocking direction, at least one of a length L of the first unlocking member 281 in the first direction X and a distance between the two second unlocking members 282 in the first direction X gradually decreases. In the first unlocking direction, when the length L of the first unlocking member 281 in the first direction X gradually decreases, a first driving surface 2811 may be formed on a side that is of the first unlocking member 281 and that faces the second unlocking member 282. The first driving surface 2811 may be an inclined surface, a curved surface, or the like. In a process in which the first unlocking member 281 moves in the first unlocking direction, the first driving surface 2811 may drive the second unlocking member 282 to move in the direction away from the first preset center, to drive the first locking part 211 to move in the direction away from the first preset center. In the first unlocking direction, when the distance between the two second unlocking members 282 in the first direction X gradually decreases, a second driving surface 2822 may be formed on a side that is of the second unlocking member 282 and that faces the first unlocking member 281. The second driving surface 2822 may be an inclined surface, a curved surface, or the like. In the process in which the first unlocking member 281 moves in the first unlocking direction, the first unlocking member 281 may drive, through the second driving surface 2822, the second unlocking member 282 to move in the direction away from the first preset center, to drive the first locking part 211 to move in the direction away from the first preset center.

An unlocking process of the first unlocking assembly 280 may be as follows: The user presses/pushes the first operation end 2831, and the first operation end 2831 drives the first unlocking member 281 and the second unlocking members 282 to move, so that the first locking part 211 is detached from the first fitting locking part 221, to implement the first unlocked state of the first support member 150 and the bearing member 101; and the user may disassemble the bearing member 101 from the first support member 150. The user may complete an unlocking operation single-handedly. Therefore, the unlocking operation is simple and convenient. For example, refer to FIG. 26. The first unlocking direction may be a direction shown by an arrow B, and the first unlocking direction may be upward, so that the user is not prone to misoperations. Alternatively, the first unlocking direction may be downward, so that it is more labor-saving for the user to operate, and it is easier to remove the electronic device 2 single-handedly. For example, a shape of the electronic device 2 may be approximately a circle, an ellipse, a polygon, or another shape. A rectangular electronic device 2 is used as an example. Refer to FIG. 6. The first operation end 2831 may be disposed at an edge of the first support member 150, and the first operation end 2831 is disposed close to an edge in a width direction of the electronic device 2, so that the first operation end 2831 is close to the edge in the width direction of the electronic device 2, and it is easier for the user's hand to reach over the electronic device 2 and operate the first operation end 2831 from the back of the electronic device 2. In addition, during a single-hand unlocking operation, some fingers of the user may be located on the back of the electronic device 2 to operate the first operation end 2831, and other fingers may be located on the front of the electronic device 2 to clamp the electronic device 2, so that the electronic device 2 can be unlocked single-handedly, and the electronic device 2 and the bearing member 101 can be removed and held single-handedly. Therefore, through fitting of the first locking member 210, the first fitting locking member 220, and the first unlocking assembly 280, simple insertion and pressing/pushing unlocking can be implemented between the first support member 150 and the bearing member 101. A structure is simple, helps reduce a volume, is convenient for the user to store, and simplifies mounting and removal.

In an implementation in which both the first locking elastic member 261 and the first unlocking assembly 280 are disposed on the first support member 150, after the user stops applying external force to the first operation end 2831, the first locking elastic member 261 may drive the first locking member 210 to move in the direction close to the first preset center and drive the second unlocking member 282 to move in the direction close to the first preset center, and the second unlocking member 282 drives the first unlocking member 281 and the first operation member 283 to move away from the first unlocking direction, so that the first unlocking member 281 can be automatically reset. In this way, an operation of the first unlocking assembly 280 is simpler and more convenient, operation steps of the user are simplified, and user experience is improved.

In some embodiments, a quantity of first locking members 210 may be one or more than two, a quantity of first fitting locking members 220 may be one or more than two, and the first locking members 210 and the first fitting locking members 220 may be disposed in a one-to-one correspondence. In addition, a second locking member 230 and a second fitting locking member 240 in the following embodiments are similar to the first locking member 210 and the first fitting locking member 220. Details are not described again.

The following describes insertion and locking of the support 105 and the mounting interface 109 provided in embodiments of this application.

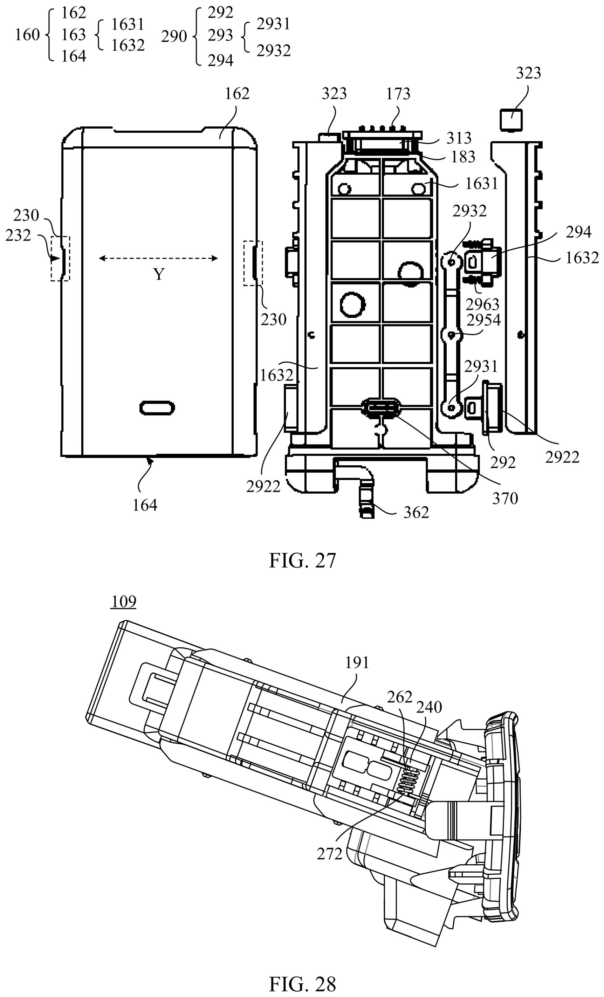

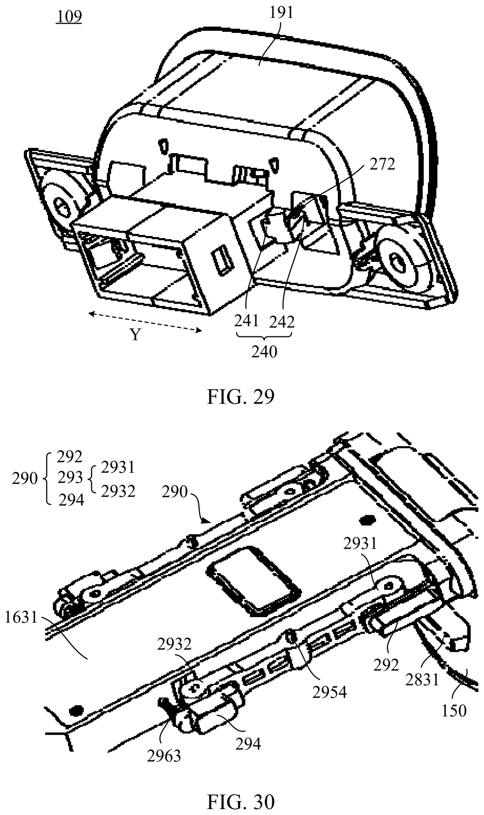

The second support member 160 is inserted into the mounting interface 109, so that mounting and removal between the second support member 160 and the mounting interface 109 are simple and convenient. In addition, there is no obvious structure that affects aesthetics of the second support member 160 and the mounting interface 109. Refer to FIG. 25 and FIG. 27. The support 105 may include two second locking members 230, the two second locking members 230 may be spaced apart on the second support member 160 in a second direction Y, and a second locking part 232 of the second locking member 230 may be exposed to an outer side of the second support member 160. Refer to FIG. 28 and FIG. 29. The mounting interface 109 may include two second fitting locking members 240, the second fitting locking members 240 may be spaced apart on the mounting member 191 in the second direction Y, and a second fitting locking part 241 of the second fitting locking member 240 is exposed to an inner side of the mounting groove 194. After the second support member 160 and the mounting member 191 are assembled, the second locking part 232 is inserted into and fits with the second fitting locking part 241, to form a second locked state of the support 105 and the mounting interface 109. Insertion directions of the second locking part 232 and the second fitting locking part 241 may be in the second direction Y, and the second direction Y may be different from a groove depth direction of the mounting groove 194 (which is equivalent to an interconnection direction of the second support member 160 and the mounting interface 109). For example, the second direction Y may be perpendicular to the groove depth direction of the mounting groove 194, so that locking can be implemented through insertion of the second locking part 232 and the second fitting locking part 241. Because the second locking part 232 and the second fitting locking part 241 implement locking of the support 105 and the mounting interface 109 through insertion, it is simple and convenient to operate, so that mounting and removal procedures of the user can be simplified, and user experience can be improved. The first direction X and the second direction Y may be the same or different.

For example, one of the second locking part 232 and the second fitting locking part 241 may be a second locking protrusion, the other of the second locking part 232 and the second fitting locking part 241 may be a second locking groove, and the second locking protrusion is inserted into the second locking groove, to implement the second locked state. There is a second preset center between second locking parts 232 of the two second locking members 230, and there is a second fitting center between second fitting locking parts 241 of the two second fitting locking members 240. A principle thereof is similar to that of the first preset center and the first fitting center. Details are not described again. The second locking protrusion may be inserted into the second locking groove in a direction toward the second preset center/the second fitting center. For example, insertion directions of the two second locking protrusions face each other. Alternatively, the second locking protrusion may be inserted into the second locking groove in a direction away from the second preset center/second fitting center. For example, insertion directions of the two second locking protrusions face away from each other.

Refer to FIG. 28. In some embodiments, a second locking elastic member 262 may be disposed on at least one of the second support member 160 and the mounting member 191. The second locking elastic member 262 may be configured to drive one of the second locking part 232 and the second fitting locking part 241 to move close to the other, so that a reliable locked state is formed between the second locking part 232 and the second fitting locking part 241, to ensure that the support 105 and the mounting interface 109 are firmly assembled and do not shake, avoid cases such as damage to the support assembly 100 and the electronic device 2 or injury to the user caused by falling of the support assembly 100 and the electronic device 2, and ensure use safety of the electronic device 2. In addition, this can prevent the support from being removed due to a misoperation of the user, to ensure safety and stability. A principle thereof is similar to a principle of disposing the first locking elastic member 261 on the first support member 150 and the fitting member 110. Details are not described again.

Refer to FIG. 27. In some embodiments, a second unlocking assembly 290 may be disposed on at least one of the second support member 160 and the mounting member 191, and the second locked state of the second locking part 232 and the second fitting locking part 241 may be released by using the second unlocking assembly 290, to separate the support 105 from the mounting interface 109. The second unlocking assembly 290 may be configured to drive one of the second locking part 232 and the second fitting locking part 241 to move away from the other, so that the second locking part 232 is detached from the second fitting locking part 241, to form a second unlocked state of the support 105 and the mounting interface 109. In some examples, refer to FIG. 27 and FIG. 30. The second unlocking assembly 290 may be disposed on the second support member 160, the second unlocking assembly 290 may be connected to the second locking member 230, and the second unlocking assembly 290 may drive the second locking part 232 to move in a direction away from the second fitting locking part 241, so that the second locking part 232 is detached from the second fitting locking part 241, and the bearing member 101 is separated from the mounting interface 109. In some other examples, the second unlocking assembly 290 may be disposed on the second support member 160, the second locking part 232 is the second locking groove, the second fitting locking part 241 is the second locking protrusion, and the second unlocking assembly 290 may push the second locking protrusion out of the second locking groove in a direction from a bottom wall of the second locking groove to an opening of the second locking groove, so that the second locking part 232 is detached from the second fitting locking part 241. In some other examples, the second unlocking assembly 290 may be disposed on the mounting member 191, the second unlocking assembly 290 may be connected to the second fitting locking member 240, and the second unlocking assembly 290 may drive the second fitting locking part 241 to move in a direction away from the second locking part 232, so that the second locking part 232 is detached from the second fitting locking part 241. In some other examples, the second unlocking assembly 290 may be disposed on the mounting member 191, the second locking part 232 is the second locking protrusion, the second fitting locking part 241 is the second locking groove, and the second unlocking assembly 290 may push the second locking protrusion out of the second locking groove in the direction from the bottom wall of the second locking groove to the opening of the second locking groove, so that the second locking part 232 is detached from the second fitting locking part 241.

The following provides descriptions by using an example in which the second locking elastic member 262 provided in embodiments of this application is located on the mounting member 191 and the second unlocking assembly 290 is located on the second support member 160.

Refer to FIG. 28 and FIG. 29. The mounting interface 109 may include a second locking elastic member 262, the second locking elastic member 262 may be separately connected to the mounting member 191 and the second fitting locking member 240, and the second locking elastic member 262 may be configured to drive the second fitting locking part 241 to move in a direction toward the second locking part 232, to form the second locked state of the mounting interface 109 and the support 105. In addition, at least a part of the second unlocking assembly 290 may be located in a second support cavity 164, and a second operation end 2922 of the second unlocking assembly 290 may be exposed outside the second support member 160, so that it is convenient for the user to operate the second operation end 2922. In addition, when the user exerts external force to the second operation end 2922, the second operation end 2922 drives the second unlocking assembly 290 to drive one of the second locking part 232 and the second fitting locking part 241 to move away from the other, so that the second locking part 232 is detached from the second fitting locking part 241, to form a second unlocked state of the support 105 and the mounting interface 109.

In embodiments of this application, an example in which the second fitting locking part 241 can move is used. The second locking elastic member 262 may drive the second fitting locking part 241 to move in a direction close to the second fitting center. Correspondingly, the second unlocking assembly 290 may drive the second fitting locking part 241 to move in a direction away from the second fitting center. Alternatively, the second locking elastic member 262 may drive the second fitting locking part 241 to move in a direction away from the second fitting center. Correspondingly, the second unlocking assembly 290 may drive the second fitting locking part 241 to move in a direction close to the second fitting center.

Embodiments of this application are described by using an example in which the second locking elastic member 262 drives the second fitting locking part 241 to move in the direction close to the second fitting center. The second locking part 232 is the second locking groove, the second fitting locking part 241 is the second locking protrusion, and the second locking protrusion may be inserted into the second locking groove in a direction toward the second preset center. Alternatively, the second locking part 232 is the second locking protrusion, the second fitting locking part 241 is the second locking groove, and the second locking protrusion may be inserted into the second locking groove in the direction away from the second preset center.

The second fitting locking part 241 may be disposed close to a side wall and/or a bottom wall of the mounting groove 194. Embodiments of this application are described by using an example in which the second fitting locking part 241 is close to the side wall of the mounting groove 194. Refer to FIG. 29. The second fitting locking part 241 may be located in the mounting groove 194, the second fitting locking member 240 may include a second rotating part 242 connected to the second fitting locking part 241, and the second rotating part 242 may extend out of the mounting groove 194 after passing through the side wall of the mounting groove 194, so that a size of the mounting groove 194 can be reduced, and an outer surface of the second support member 160 is close to the side wall of the mounting groove 194, thereby relieving shaking between the second support member 160 and the mounting interface 109.

For example, refer to FIG. 28 and FIG. 29. The mounting interface 109 may include a second rotating shaft 272, the second rotating part 242 may be rotatably connected to the mounting member 191 through the second rotating shaft 272, and the second rotating shaft 272 may be located outside the mounting groove 194. This helps reduce the size of the mounting groove 194. The second locking elastic member 262 may be separately connected to the mounting member 191 and the second fitting locking member 240, and the second fitting locking part 241 rotates in a direction close to the second fitting center under elastic force of the second locking elastic member 262, so that a reliable second locked state is formed between the second locking part 232 and the second fitting locking part 241.

Embodiments of this application are described by using an example in which the second unlocking assembly 290 drives the second fitting locking part 241 to move in a direction away from the second fitting center.

Refer to FIG. 27, FIG. 30, and FIG. 31. The support 105 may include a second unlocking assembly 290, there may be two second unlocking assemblies 290, and the second unlocking assemblies 290 and the second locking members 230 may be disposed in a one-to-one correspondence. The second support member 160 may have a second support cavity 164, at least a part of the second unlocking assembly 290 may be located in the second support cavity 164, and the second operation end 2922 of the second unlocking assembly 290 may be exposed outside the second support cavity 164 and the mounting groove 194, so that it is convenient for the user to operate the second operation end 2922. The second locking part 232 may be the second locking groove, and the second fitting locking part 241 may be the second locking protrusion. The second locking groove may be a through groove disposed on the second support housing 162, and the second locking groove may communicate with the second support cavity 164. The second unlocking assembly 290 may include a second operation member 292, a third unlocking member 293, and a fourth unlocking member 294, the second operation end 2922 may be disposed on the second operation member 292, and the third unlocking member 293 and the fourth unlocking member 294 are located in the second support cavity 164. The third unlocking member 293 may include a first end 2931 and a second end 2932 in extension directions, and a middle section located between the first end 2931 and the second end 2932. For example, the middle section of the third unlocking member 293 may be rotatably connected to the assembly member 163 through the fourth rotating shaft 2954. When the first end 2931 may move in a direction toward the second preset center, the middle section of the third unlocking member 293 rotates around the fourth rotating shaft 2954, so that the second end 2932 moves in a direction away from the second preset center. The first end 2931 of the third unlocking member 293 may be connected to the second operation member 292, the second end 2932 of the third unlocking member 293 is connected to the fourth unlocking member 294, and the fourth unlocking member 294 is disposed opposite to the second locking groove. For example, the user may drive the second operation member 292 to move in the direction toward the second preset center, to drive the first end 2931 to move in the direction toward the second preset center, the third unlocking member 293 rotates around the fourth rotating shaft 2954, and the second end 2932 drives the fourth unlocking member 294 to move in the direction away from the second preset center, so that at least a part of the fourth unlocking member 294 passes through the second locking groove and is located outside the second support member 160, to push the second fitting locking part 241 out of the second locking groove, and form the second unlocked state of the support 105 and the mounting interface 109, so that the user can pull the second support member 160 out of the mounting groove 194.

For example, refer to FIG. 27 and FIG. 30. The assembly member 163 may include a first assembly member 1631 and second assembly members 1632 located on two opposite sides of the first assembly member 1631 in the second direction Y. The fourth rotating shaft 2954 may be rotatably connected to the second assembly member 1632, and in the second direction Y, the third unlocking member 293 may be spaced apart from the first assembly member 1631 and the second locking part 232, to provide movement space in the second direction Y for the first end 2931 and the second end 2932. The second assembly member 1632 may have an assembly groove facing away from the first assembly member 1631, and at least a part of the second operation member 292, the third unlocking member 293, and the fourth unlocking member 294 may be located in the assembly groove.

For example, refer to FIG. 27. At least one third reset elastic member 2963 may be disposed between a bottom wall of the assembly groove and at least one of the second operation member 292 and the fourth unlocking member 294. In this way, when the second operation member 292 and/or the fourth unlocking member 294 are/is not subject to external force, the second operation member 292 and/or the fourth unlocking member 294 may move in the direction away from the second preset center, and abut against an inner surface of the second support housing 162, to block a through groove that is on the second support housing 162 and that is used to expose the second operation member 292 and/or the fourth unlocking member 294, and prevent dust from entering the second support cavity 164 through the through groove. For example, when the second operation member 292 and/or the fourth unlocking member 294 abut/abuts against the inner surface of the second support housing 162, the second operation member 292 and/or the fourth unlocking member 294 may be flush with an outer surface of the second support housing 162, so that surface flatness of the second support member 160 is improved, and dust is not easily deposited. Certainly, when the second operation member 292 and/or the fourth unlocking member 294 abut/abuts against the inner surface of the second support housing 162, the second operation member 292 and/or the fourth unlocking member 294 may alternatively be in a concave or convex state relative to the outer surface of the second support housing 162.

An unlocking process of the second unlocking assembly 290 may be as follows: The user simultaneously presses/pushes second operation ends 2922 of the two second unlocking assemblies 290, so that the second operation member 292 drives the third unlocking member 293 and the fourth unlocking member 294 to move, and the fourth unlocking member 294 moves in the direction away from the second preset center and passes through the second locking part 232, to push the second fitting locking part 241 out of the second locking part 232, so as to implement the second unlocked state; and then, the user pulls out the second support member 160, to detach the second support member 160 from the mounting interface 109. Through fitting of the second locking member 230, the second fitting locking member 240, and the second unlocking assemblies 290, simple insertion and pressing/pushing unlocking can be implemented between the second support member 160 and the mounting interface 109. A structure is simple, helps reduce a volume, is convenient to store, and simplifies mounting and removal.

In some embodiments, the first unlocking assembly 280 may be used for unlocking between the second support member 160 and the mounting interface 109. A principle thereof has been described. Details are not described again.

In some embodiments, the second unlocking assembly 290 may be used for unlocking between the first support member 150 and the bearing member 101. A principle thereof has been described. Details are not described again.

Refer to FIG. 27. In some embodiments, an auxiliary charging interface 370 may be further disposed on the second support member 160, and the auxiliary charging interface 370 is exposed outside the second support member 160, so that availability of the support 105 can be improved. In an implementation in which both the auxiliary charging interface 370 and the charging interface 131 are disposed, the user may use either the auxiliary charging interface 370 or the charging interface 131 to charge one electronic device 2, or may use the auxiliary charging interface 370 and the charging interface 131 to charge two electronic devices 2 respectively. Certainly, the auxiliary charging interface 370 may alternatively be disposed on at least one of the first support member 150, the bearing member 101, and the mounting interface 109.

In an implementation in which the clamping member 120 is not disposed, the fitting member 110 is used as a main body part of the bearing member 101 to support and connect the electronic device 2. The charging interface 131 and/or the auxiliary charging interface 370 may be disposed on the fitting member 110; or the charging interface 131 and/or the auxiliary charging interface 370 may not be disposed on the fitting member 110, and the fitting member 110 cannot charge the electronic device 2. This helps reduce a volume of the fitting member 110 and reduce costs.

It may be understood that different bearing members 101 may meet different requirements of a customer, and one support 105 may adapt to a plurality of bearing members 101 at the same time, to better free hands of the user, so that the support assembly 100 can be applicable to more electronic devices 2.

The following describes a magnetic connection between the support 105 and the bearing member 101 provided in embodiments of this application.

Refer to FIG. 24. The support 105 may include a first magnetic member 321, and the first magnetic member 321 may be located in the first support cavity 152 of the first support member 150, to protect the first magnetic member 321. A groove may be disposed in the first support cavity 152 to accommodate the first magnetic member 321 and limit the first magnetic member 321, to avoid misplacement of the first magnetic member 321 in a subsequent assembly process. In addition, the first magnetic member 321 may be quickly mounted by using the groove. In addition, the bearing member 101 may include a second magnetic member, and the second magnetic member may be located in the fitting cavity 113 of the fitting member 110, to protect the second magnetic member. A groove may be disposed in the fitting cavity 113 to accommodate the second magnetic member and limit the second magnetic member, to avoid misplacement of the second magnetic member in a subsequent assembly process. In addition, the second magnetic member may be quickly mounted by using the groove. The first magnetic member 321 and the second magnetic member are disposed opposite to each other in a direction from the first support member 150 to the fitting member 110, and the first magnetic member 321 and the second magnetic member attract each other, to improve stability of the connection between the support 105 and the bearing member 101, and reduce shaking between the support 105 and the bearing member 101.

For example, there may be at least one first magnetic member 321 and at least one second magnetic member. When there are a plurality of first magnetic members 321 and a plurality of second magnetic members, the first magnetic members 321 and the second magnetic members may be disposed in a one-to-one correspondence. For example, a direction from an N pole to an S pole on the first magnetic member 321 and a direction from an N pole to an S pole on the second magnetic member intersect (for example, may intersect vertically) with the direction from the first support member 150 to the fitting member 110, and the direction from the N pole to the S pole on the first magnetic member 321 is opposite to the direction from the N pole to the S pole on the second magnetic member. When the first support member 150 is interconnected with the fitting member 110 in a preset direction (to implement normal charging of the electronic device 2), the N pole on the first magnetic member 321 is disposed corresponding to the S pole on the second magnetic member, and the S pole on the first magnetic member 321 is disposed corresponding to the N pole on the second magnetic member, so that the first magnetic member 321 and the second magnetic member attract each other. This facilitates a connection between the first support member 150 and the fitting member 110. In addition, if the fitting member 110 is rotated by 180° and then is connected to the first support member 150, the N pole on the first magnetic member 321 is disposed corresponding to the N pole on the second magnetic member, and the S pole on the first magnetic member 321 is disposed corresponding to the S pole on the second magnetic member, so that the first magnetic member 321 and the second magnetic member repel each other, and the user can feel repulsive force of the first support member 150 on the fitting member 110. In this way, the user can be reminded that an assembly direction is incorrect, and a possibility of reverse mounting is reduced.

A magnetic member is a substance or material that can generate a magnetic field, or is a magnetic object. The magnetic member has two polarities. Any magnetic member has two magnetic poles: a magnetic north pole (also referred to as an N pole) and a magnetic south pole (also referred to as an S pole). Magnetic strength of parts of the magnetic member is different, and a magnetic pole is a part with strongest magnetic strength on a magnet. Magnetic poles interact with each other. Same magnetic poles repel each other, and different magnetic poles attract each other. Magnetic members are generally classified into permanent magnets and soft magnets.

The following describes a first limiting member 331 of the support 105 and a second limiting member 332 of the bearing member 101 provided in embodiments of this application.

Refer to FIG. 8 and FIG. 9. The support 105 may include the first limiting member 331, the first limiting member 331 may be exposed on the side that is of the first support member 150 and that faces away from the second support member 160, and the first limiting member 331 may face the fitting member 110. For example, the first limiting member 331 may be annularly disposed on an outer periphery of the first conductive contact 171, and the first limiting member 331 may be an annular limiting member. The bearing member 101 may include the second limiting member 332, the second limiting member 332 may be exposed on the side that is of the fitting member 110 and that faces the support 105, the second limiting member 332 may be annularly disposed on an outer periphery of the second conductive contact 172, and the second limiting member 332 may be an annular limiting member. The first limiting member 331 may be inserted into the second limiting member 332, to limit the first support member 150 and the fitting member 110. Because both the first limiting member 331 and the second limiting member 332 are annular, relative positions of the first support member 150 and the fitting member 110 may be limited in various directions, to avoid shaking between the first support member 150 and the fitting member 110 in various directions. When the vehicle shakes due to a bumpy road in a traveling process, fitting between the first limiting member 331 and the second limiting member 332 can offset acting force generated by the shaking, thereby ensuring that the electronic device 2 remains stable and safe in the traveling process, and implementing 360° anti-shaking.

For example, one of the first limiting member 331 and the second limiting member 332 may be a limiting protrusion (for example, may be made of a metal material or a non-metal material), the other of the first limiting member 331 and the second limiting member 332 may be a limiting groove, and the limiting protrusion is inserted into the limiting groove.

The following describes a first anti-reverse member 341 of the support 105 and a second anti-reverse member 342 of the bearing member 101 provided in embodiments of this application.

Refer to FIG. 8 and FIG. 9. The support 105 may include the first anti-reverse member 341, the first anti-reverse member 341 is exposed on the side that is of the first support member 150 and that faces away from the second support member 160, and the first anti-reverse member 341 may face the fitting member 110. For example, the first anti-reverse member 341 may be located on an inner side of the first limiting member 331. This helps increase a circumference of the first limiting member 331, and improve limiting and anti-shaking effect of the first limiting member 331. The bearing member 101 may include the second anti-reverse member 342, and the second anti-reverse member 342 may be exposed on the side that is of the fitting member 110 and that faces the support 105. For example, the second anti-reverse member 342 may be located on an inner side of the second limiting member 332. This helps increase a circumference of the second limiting member 332, and improve limiting and anti-shaking effect of the second limiting member 332. The first anti-reverse member 341 may be inserted into the second anti-reverse member 342. When the first support member 150 and the fitting member 110 are interconnected in a preset direction, the first anti-reverse member 341 and the second anti-reverse member 342 may be disposed opposite to each other and inserted into each other. In addition, if the fitting member 110 is rotated by 180° (or another angle) and then is connected to the first support member 150, the first anti-reverse member 341 and the second anti-reverse member 342 are staggered, and cannot be inserted into each other. Consequently, the first support member 150 and the fitting member 110 cannot be incorrectly assembled, thereby implementing a foolproof design.

For example, one of the first anti-reverse member 341 and the second anti-reverse member 342 may be a foolproof protrusion, the other of the first anti-reverse member 341 and the second anti-reverse member 342 may be a foolproof groove, and the foolproof protrusion may be inserted into the foolproof groove.

The following describes the mounting interface 109 provided in embodiments of this application.

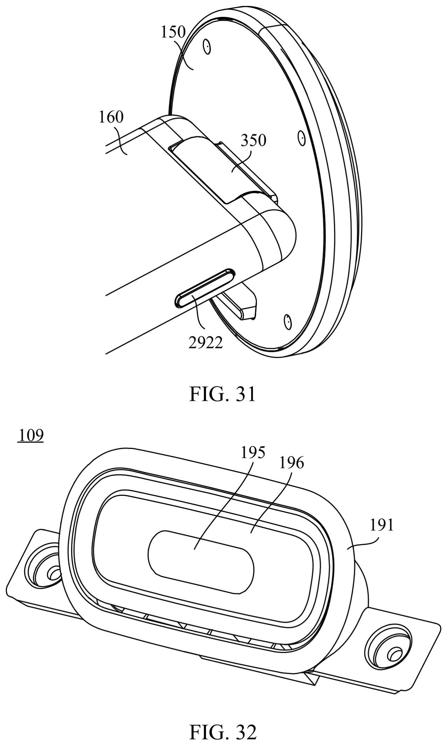

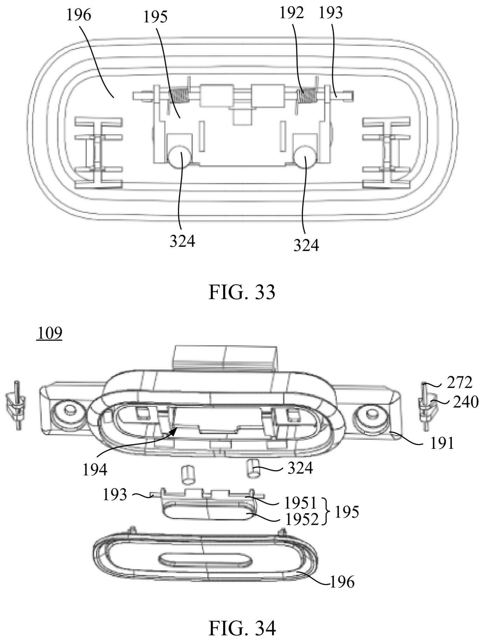

Refer to FIG. 32 and FIG. 33. In some embodiments, the mounting interface 109 may include a protective member 195, and the protective member 195 may cover the opening of the mounting groove 194. When the support 105 and the mounting interface 109 are not assembled, the protective member 195 may be configured to cover the opening of the mounting groove 194, to prevent external sundries, dust, and the like from entering the mounting groove 194, to protect a mechanical member in the mounting groove 194.

Refer to FIG. 33 and FIG. 34. The protective member 195 may include a first protective end 1951 and a second protective end 1952 that are connected. The first protective end 1951 may be rotatably connected to the mounting member 191, and the second protective end 1952 may rotate in a direction close to or away from the bottom wall of the mounting groove 194. When the user interconnects the second support member 160 with the mounting groove 194, the second support member 160 may push the second protective end 1952 to rotate in the direction close to the bottom wall of the mounting groove 194, to open the protective member 195, so that the second support member 160 can be inserted into the mounting groove 194.

For example, the mounting interface 109 may include a second reset elastic member 192, a third rotating shaft 193, and a stopper 196. The protective member 195 may be rotatably connected to the mounting member 191 through the third rotating shaft 193, and the stopper 196 may be located on a side that is of the protective member 195 and that faces away from the bottom wall of the mounting groove 194. The third rotating shaft 193 may be rotatably connected to the mounting member 191 and/or the stopper 196. The second reset elastic member 192 may be connected to the protective member 195, and the second reset elastic member 192 may be further connected to the stopper 196 and/or the mounting member 191. After the user removes the second support member 160 from the mounting groove 194, the second reset elastic member 192 may drive the second protective end 1952 to rotate in the direction away from the bottom wall of the mounting groove 194, so that the second protective end 1952 abuts against a side that is of the stopper 196 and that faces the bottom wall of the mounting groove 194, to form a reset state of the protective member 195. When the protective member 195 is in the reset state, the protective member 195 blocks the opening of the mounting groove 194, to protect a mechanical member in the mounting groove 194. The stopper 196 can prevent the second protective end 1952 from extending out of the mounting groove 194 through the opening of the mounting groove 194 due to excessive rotation. The second reset elastic member 192 may provide the second protective end 1952 with elastic force away from the bottom wall of the mounting groove 194. When the support 105 and the mounting interface 109 are not assembled, the elastic force may prevent the user (for example, a child) from extending a finger or another object into the mounting groove 194, thereby improving safety of the mounting interface 109, avoiding a misoperation, and protecting the mounting groove 194.

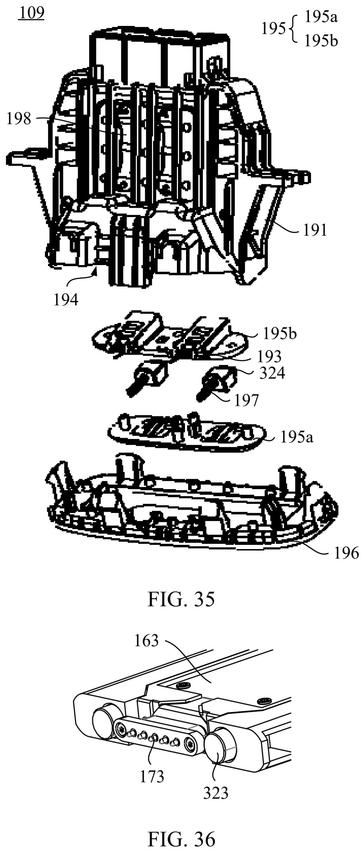

In some embodiments, an elastic abutting member 198 (FIG. 35) may be disposed on one of the mounting member 191 and the second support member 160, an abutting surface may be disposed on the other of the mounting member 191 and the second support member 160, the elastic abutting member 198 may abut against the abutting surface, and at least a part of the elastic abutting member 198 may be located between the mounting groove 194 and an outer wall surface of the second support member 160. For example, refer to FIG. 35. The elastic abutting member 198 is disposed on the mounting member 191. The elastic abutting member 198 reduces shaking between the mounting member 191 and the second support member 160, improves stability of a connection between the mounting member 191 and the second support member 160, can further relieve stress of the mounting member 191 and the second support member 160 in a traveling process of the vehicle, and can protect the mounting member 191 and the second support member 160.

The following describes a third magnetic member 323 of the support 105 and a fourth magnetic member 324 of the mounting interface 109 provided in embodiments of this application.

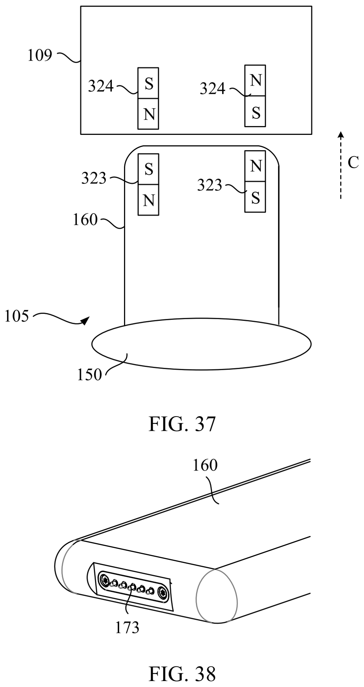

Refer to FIG. 36 and FIG. 37. The support 105 may include the third magnetic member 323, the third magnetic member 323 may be located on the second support member 160, and the third magnetic member 323 may be disposed close to an end that is of the second support member 160 and that is away from the first support member 150. The third magnetic member 323 may be located in the second support cavity 164. For example, the third magnetic member 323 may be mounted on the assembly member 163 (for example, the second assembly member 1632). Refer to FIG. 34 and FIG. 37. The mounting interface 109 may include the fourth magnetic member 324, and the fourth magnetic member 324 may be located on a side that is of the second protective end 1952 and that faces the bottom wall of the mounting groove 194. The third magnetic member 323 and the fourth magnetic member 324 repel each other. When the second support member 160 is inserted into the mounting groove 194, the third magnetic member 323 and the fourth magnetic member 324 repel each other, and the repulsion force may push the second protective end 1952 to move toward the bottom wall of the mounting groove 194. This helps push the protective member 195 away and insert the second support member 160 into the mounting groove 194.

For example, there is at least one third magnetic member 323 and at least one fourth magnetic member 324. When there are a plurality of third magnetic members 323 and a plurality of fourth magnetic members 324, the third magnetic members 323 and the fourth magnetic members 324 may be disposed in a one-to-one correspondence.

For example, refer to FIG. 37. An arrow C shows a direction in which the second support member 160 is interconnected to the mounting groove 194, and a direction from an N pole to an S pole on the third magnetic member 323 and a direction from an N pole to an S pole on the fourth magnetic member 324 may be parallel to the direction in which the second support member 160 is interconnected to the mounting groove 194. Directions from the N poles to the S poles on the third magnetic member 323 and the fourth magnetic member 324 that are correspondingly disposed are the same. For example, there may be two third magnetic members 323, and the two third magnetic members 323 may be spaced apart in the second direction Y. A direction from an N pole to an S pole on one third magnetic member 323 may be opposite to a direction from an N pole to an S pole on the other third magnetic member 323. Correspondingly, the two fourth magnetic members 324 may be spaced apart in the second direction Y. A direction from an N pole to an S pole on one fourth third magnetic member may be opposite to a direction from an N pole to an S pole on the other fourth magnetic member 324. When the second support member 160 is interconnected to the mounting groove 194 in a preset direction, directions from the N poles to the S poles on the third magnetic member 323 and fourth magnetic member 324 that are correspondingly disposed are the same, and the third magnetic member 323 and the fourth magnetic member 324 repel each other. This helps push the protective member 195 away and insert the second support member 160 into the mounting groove 194. If the second support member 160 is rotated by 180°, and the second support member 160 is interconnected to the mounting groove 194, directions from the N poles to the S poles on the third magnetic member 323 and fourth magnetic member 324 that are correspondingly disposed are opposite, the third magnetic member 323 and the fourth magnetic member 324 attract each other, to provide the second protective end 1952 with attraction force in a direction away from the bottom wall of the mounting groove 194. This prevents the second support member 160 from being inserted into the mounting groove 194, and prevents the second support member 160 and the mounting groove 194 from being reversely mounted, thereby implementing a foolproof design.

For example, refer to FIG. 35. The protective member 195 may include a first protective member 195a and a second protective member 195b that are engaged to each other, and the fourth magnetic member 324 may be located in an accommodation area between the first protective member 195a and the second protective member 195b. An elastic cushioning member 197 may be disposed in the accommodating area, and the fourth magnetic member 324 may be connected to the protective member 195 through the elastic cushioning member 197, so that external force exerted on the fourth magnetic member 324 can be alleviated, a movement speed of the fourth magnetic member 324 under an action of the external force is reduced, to reduce a movement speed of the protective member 195, and prevent the protective member 195 from colliding with another mechanical member due to excessively fast movement.

The following describes a third conductive contact 173 of the support 105 and a fourth conductive contact of the mounting interface 109 provided in embodiments of this application.

Refer to FIG. 27 and FIG. 38. The support 105 may include the third conductive contact 173, the third conductive contact 173 may be exposed on a side that is of the second support member 160 and that is away from the first support member 150, and the third conductive contact 173 may be electrically connected to the first conductive contact 171. There may be at least one third conductive contact 173. When there are a plurality of third conductive contacts 173, the plurality of third conductive contacts 173 may be spaced apart. A third conductive member 183 and a circuit board may be disposed in the second support cavity 164, and both the third conductive member 183 and the circuit board may be mounted on the assembly member 163 (for example, the first assembly member 1631). At least a part of the third conductive contact 173 may be located in the second support cavity 164, and is connected to the third conductive member 183. The third conductive contact 173 is electrically connected to the circuit board through the third conductive member 183. The circuit board may be connected to the first conductive member 181 (FIG. 12) through a second adapter 362, to implement an electrical connection with the first conductive contact 171.

For example, refer to FIG. 27. A third auxiliary member 313 may be wrapped outside the third conductive contact 173, the third auxiliary member 313 may protect and support the third conductive contact 173, and one end of the third conductive contact 173 may extend out of a side that is of the third auxiliary member 313 and that faces away from the assembly member 163.

For example, refer to FIG. 2 and FIG. 4. A charging module may be disposed on the circuit board, and a battery may charge the electronic device 2 through the charging module. The mounting interface 109 may include a fourth conductive contact, the fourth conductive contact may be disposed on the mounting member 191, and the fourth conductive contact may be exposed to an inner side of the mounting groove 194. The third conductive contact 173 may be in contact with the fourth conductive contact, so that the support 105 and the mounting interface 109 are connected through contacts. Because the second support member 160 and the mounting interface 109 are connected through contacts, no open wire between the second support member 160 and the mounting interface 109 is needed, thereby reducing impact on a layout of another mechanical member in the mounting groove 194. There may be at least one fourth conductive contact. When there are a plurality of fourth conductive contacts, the plurality of fourth conductive contacts may be spaced apart. A fourth conductive member may be disposed on the mounting member 191, the fourth conductive contact may be connected to the fourth conductive member, and the fourth conductive member may be electrically connected to the battery through a connector and the cable 15. Refer to FIG. 21 and FIG. 27. This is equivalent to that the battery may sequentially pass through the cable 15 (FIG. 4), the connector, the fourth conductive member, the fourth conductive contact, the third conductive contact 173, the third conductive member 183, the circuit board, the second adapter 362, the first conductive member 181 (FIG. 12), the first conductive contact 171, the second conductive contact 172, the second conductive member 182, the first adapter 361, the charging connector 132, and the charging interface 131, and provide electric energy for the electronic device 2. For example, any one or more of the first adapter 361, the second adapter 362, and the charging connector 132 may be a flexible circuit board, a metal conductive member, or another conductive member. Any one or more of the first conductive member 181, the second conductive member 182, the third conductive member 183, and the fourth conductive member may be a flexible circuit board, a printed circuit board, a metal conductive member, or another conductive member.

For example, the vehicle 1 may include a controller, and the controller may be electrically connected to the connector. The third conductive contact 173 and the fourth conductive contact may include a first detection contact. After the first detection contact of the third conductive contact 173 is in contact with the first detection contact of the fourth conductive contact, a first detection signal may be sent to the controller, to indicate that the mounting interface 109 is connected to the second support member 160. The first detection contact of the third conductive contact 173 may be electrically connected to the first detection contact of the fourth conductive contact through a first detection cable 13a (FIG. 2). In addition, each of the first conductive contact 171, the second conductive contact 172, the third conductive contact 173, and the fourth conductive contact may include a second detection contact. After the second detection contact of the first conductive contact 171 is in contact with the second detection contact of the second conductive contact 172, and the second detection contact of the third conductive contact 173 is in contact with the second detection contact of the fourth conductive contact, a second detection signal may be sent to the controller, to indicate that the bearing member 101 is connected to the first support member 150. Second detection contacts of the first conductive contact 171, the second conductive contact 172, the third conductive contact 173, and the fourth conductive contact may be electrically connected through a second detection cable 13b (FIG. 2). For example, when the controller obtains the first detection signal and the second detection signal, the controller is configured to control the battery to charge the support 105, and when the controller does not detect the first detection signal or the second detection signal, the controller is configured to control the battery not to charge the support 105, to improve use safety of the charging system 13.

For example, the first conductive contact 171, the second conductive contact 172, the third conductive contact 173, and the fourth conductive contact each may include a charging contact, and the charging contacts of the four conductive contacts may be electrically connected through a charging cable 13c (FIG. 2), to charge the electronic device 2. The first conductive contact 171, the second conductive contact 172, the third conductive contact 173, and the fourth conductive contact each may include a ground contact, and the ground contacts of the four conductive contacts may be electrically connected through a ground cable 13d.

For example, any one or more of the first conductive contact 171, the second conductive contact 172, the third conductive contact 173, and the fourth conductive contact may be formed by a pogo pin (pogo pin).

In descriptions of embodiments of this application, it should be noted that, unless otherwise explicitly stipulated and restricted, terms "mounted", "connection", and "connected" should be understood in a broad sense. For example, connection may be a fixed connection, may be an indirect connection through a medium, may be an internal communication between two components, or may be an interactive relationship between two components. A person of ordinary skill in the art may understand specific meanings of the foregoing terms in embodiments of this application based on specific cases.

The terms such as "first", "second", "third", "fourth", and the like (if any) are intended to distinguish between similar objects but do not necessarily indicate a specific order or sequence.

Finally, it should be noted that the foregoing embodiments are merely used to describe the technical solutions in embodiments of this application, but not to limit the technical solutions. Although embodiments of this application are described in detail with reference to the foregoing embodiments, a person of ordinary skill in the art should understand that the technical solutions recorded in the foregoing embodiments may still be modified, or some or all of technical features thereof may be equivalently replaced. However, these modifications or replacements do not depart from the scope of the technical solutions in embodiments of this application.

## Claims

1. A support, configured to be electrically connected to a bearing member, wherein the support comprises a first support member, a second support member, and a first conductive contact, the second support member is located on a side of the first support member, and a side that is of the first support member and that faces away from the second support member is configured to be inserted into the bearing member; and
the first conductive contact is exposed on the side that is of the first support member and that faces away from the second support member, and the first conductive contact is configured to be in contact with a second conductive contact of the bearing member.

2. The support according to claim 1, wherein two first locking members are spaced apart on the first support member in a first direction, and a first locking part of the first locking member is exposed on the side that is of the first support member and that faces away from the second support member;
the first locking part is configured to be inserted into a first fitting locking part of the bearing member, to form a first locked state of the support and the bearing member; and
insertion directions of the first locking part and the first fitting locking part are in the first direction, and the first direction is different from a direction from the first support member to the bearing member.

3. The support according to claim 2, further comprising a first locking elastic member, wherein the first support member has a first support cavity, and the first locking elastic member and at least a part of the first locking member are located in the first support cavity; and
the first locking elastic member is separately connected to the first support member and the first locking member, and the first locking elastic member is configured to drive the first locking part to move in a direction toward the first fitting locking part, to form the first locked state of the support and the bearing member.

4. The support according to claim 3, comprising a first unlocking assembly, wherein at least a part of the first unlocking assembly is located in the first support cavity, and a first operation end of the first unlocking assembly is exposed outside the first support member; and
the first unlocking assembly is configured to drive one of the first locking part and the first fitting locking part to move away from the other, so that the first locking part is detached from the first fitting locking part, to form a first unlocked state of the support and the bearing member.

5. The support according to claim 4, wherein there is a first preset center between the two first locking members; and the first locking part is a first locking protrusion, and the first locking protrusion is configured to be inserted into the first fitting locking part in a direction toward the first preset center; or the first locking part is a first locking groove, and the first fitting locking part is inserted into the first locking groove in a direction away from the first preset center;
the support further comprises a first rotating shaft, the first locking member comprises a first rotating part facing away from the first locking part, both the first rotating part and the first rotating shaft are located in the first support cavity, and the first rotating part is rotatably connected to the first support member through the first rotating shaft; and
the first locking part rotates in a direction close to the first preset center under elastic force of the first locking elastic member.

6. The support according to claim 4, wherein the first unlocking assembly comprises a first operation member, a first unlocking member, and two second unlocking members, the first unlocking member and the second unlocking members are all located in the first support cavity, the second unlocking members one-to-one correspond to the first locking members, the first operation member is provided with the first operation end, and the first operation end is exposed on a side that is of the first support member and that faces the second support member;
the two second unlocking members respectively abut against two opposite sides of the first unlocking member in the first direction, and a side that is of the second unlocking member and that faces away from the first unlocking member abuts against the corresponding first locking member;
the first operation member is connected to the first unlocking member, the first unlocking member is movably connected to the first support member in a first unlocking direction of the first operation member, and the second unlocking member is movably connected to the first support member in the first direction; and
in the first unlocking direction, at least one of a length of the first unlocking member in the first direction and a distance between the two second unlocking members in the first direction gradually decreases, and the first unlocking direction is perpendicular to the first direction.

7. The support according to any one of claims 1 to 6, comprising a first magnetic member, wherein the first magnetic member is located in the first support member, and the first magnetic member is configured to attract a second magnetic member of the bearing member.

8. The support according to any one of claims 1 to 6, wherein a first limiting member is disposed on the first support member, the first limiting member is exposed on the side that is of the first support member and that faces away from the second support member, the first limiting member is annularly disposed on an outer periphery of the first conductive contact, and the first limiting member is configured to be inserted into a second limiting member of the bearing member.

9. The support according to any one of claims 1 to 6, wherein a first anti-reverse member is disposed on the first support member, the first anti-reverse member is exposed on the side that is of the first support member and that faces away from the second support member, and the first anti-reverse member is configured to be inserted into a second anti-reverse member of the bearing member.

10. The support according to any one of claims 1 to 6, wherein an end that is of the second support member and that faces away from the first support member is configured to be inserted into a mounting groove of a mounting interface, two second locking members are spaced apart on the second support member in a second direction, and a second locking part of the second locking member is exposed on an outer side of the second support member;
the second locking part is configured to be inserted into a second fitting locking part of the mounting interface, to form a second locked state of the support and the mounting interface; and
insertion directions of the second locking part and the second fitting locking part are in the second direction, and the second direction is different from a groove depth direction of the mounting groove.

11. The support according to claim 10, comprising two second unlocking assemblies, wherein the second unlocking assemblies are disposed in a one-to-one correspondence with the second locking members, the second support member has a second support cavity, at least a part of the second unlocking assembly is located in the second support cavity, and a second operation end of the second unlocking assembly is exposed outside the second support cavity and the mounting groove; and
the second unlocking assembly is configured to drive one of the second locking part and the second fitting locking part to move away from the other, so that the second locking part is detached from the second fitting locking part, to form a second unlocked state of the support and the mounting interface.

12. The support according to claim 11, wherein there is a second preset center between the two second locking members, the second locking part is a second locking groove, and the second fitting locking part is inserted into the second locking groove in a direction toward the second preset center;
the second locking groove communicates with the second support cavity, the second unlocking assembly comprises a second operation member, a third unlocking member, and a fourth unlocking member, the second operation end is disposed on the second operation member, and the third unlocking member and the fourth unlocking member are located in the second support cavity;
a first end in an extension direction of the third unlocking member is connected to the second operation member, a second end in an extension direction of the third unlocking member is connected to the fourth unlocking member, the fourth unlocking member is disposed opposite to the second locking groove, and a middle section of the third unlocking member is rotatably connected to the second support member; and
the second operation member drives the first end to move in the direction toward the second preset center, and the second end drives the fourth unlocking member to move in a direction away from the second preset center, so that at least a part of the fourth unlocking member passes through the second locking groove and is located outside the second support member.

13. The support according to any one of claims 1 to 6, comprising a third magnetic member, wherein the third magnetic member is disposed close to an end that is of the second support member and that is away from the first support member, and the third magnetic member is configured to repel a fourth magnetic member of the mounting interface.

14. The support according to any one of claims 1 to 6, comprising a third conductive contact, wherein the third conductive contact is exposed on a side that is of the second support member and that is away from the first support member, and the third conductive contact is configured to be in contact with a fourth conductive contact of the mounting interface and is electrically connected to the first conductive contact.

15. A bearing member, configured to be electrically connected to a support and a to-be-borne member, wherein the bearing member comprises a fitting member and a second conductive contact, a side of the fitting member is configured to be inserted into the support, and a side that is of the fitting member and that faces away from the support is configured to face the to-be-borne member; and
the second conductive contact is exposed on the side that is of the fitting member and that faces the support, and the second conductive contact is configured to be in contact with a first conductive contact of the support.

16. The bearing member according to claim 15, further comprising a clamping member, wherein the clamping member is located on at least a part of an outer periphery of the fitting member, the clamping member comprises a clamping part away from the fitting member, the clamping part extends in a direction away from the support, and the clamping part is configured to abut against an outer peripheral wall of the to-be-borne member.

17. The bearing member according to claim 16, further comprising a charging interface and a retractable charging connector, wherein the charging interface is configured to be electrically connected to the to-be-borne member, at least a part of the charging connector is located in the clamping member, at least a part of the charging interface is located on a side that is of the clamping part and that faces the fitting member, the charging interface is connected to a movable end of the charging connector and is electrically connected to the second conductive contact through the charging connector, and the charging interface moves in a direction close to or away from the fitting member.

18. The bearing member according to claim 17, wherein the clamping member is disposed around an outer periphery of the fitting member, the clamping member and the fitting member jointly form an accommodation groove facing away from the support, and the accommodation groove is configured to accommodate the to-be-borne member.

19. The bearing member according to claim 17, wherein the clamping member comprises a plurality of clamping sub-members, and the plurality of clamping sub-members are spaced apart in a circumferential direction of the fitting member; and
the plurality of clamping sub-members comprise a first clamping sub-member and a second clamping sub-member, and the first clamping sub-member and the second clamping sub-member are respectively located on two opposite sides of the fitting member.

20. The bearing member according to any one of claims 17 to 19, wherein the clamping member and the fitting member are relatively static, and the movable end moves in a direction close to or away from the clamping member;
the bearing member further comprises a reset assembly, the clamping member has a clamping cavity, the reset assembly is located in the clamping cavity, and the reset assembly is connected to the movable end; and
the reset assembly is configured to drive the movable end to move in the direction close to the clamping member, to form a retracted state of the charging interface.

21. The bearing member according to claim 20, wherein the reset assembly comprises a reset member and a first reset elastic member, the reset member is movably connected to the clamping member in a telescopic direction of the charging connector, and the reset member is connected to the movable end; and
the first reset elastic member is separately connected to the reset member and the clamping member, and the reset member drives, under elastic force of the first reset elastic member, the movable end to move in the direction close to the clamping member, to form the retracted state of the charging interface.

22. The bearing member according to claim 19, wherein each clamping sub-member is telescopically connected to the fitting member, a clamping part of each clamping sub-member moves in the direction close to or away from the fitting member, and a clamping part of one clamping sub-member is connected to the movable end and is static relative to the movable end.

23. The bearing member according to any one of claims 15 to 19, wherein two first fitting locking members are spaced apart on the fitting member in a first direction, and a first fitting locking part of the first fitting locking member is exposed on the side that is of the fitting member and that faces the support;
the first fitting locking part is configured to be inserted into a first locking part of the support, to form a first locked state of the support and the bearing member; and
insertion directions of the first locking part and the first fitting locking part are in the first direction, and the first direction is different from a direction from a first support member of the support to the bearing member.

24. The bearing member according to claim 23, wherein there is a first fitting center between the two first fitting locking members; and
the first fitting locking part is a first locking groove, and the first locking part is inserted into the first locking groove in a direction toward the first fitting center; or the first fitting locking part is a first locking protrusion, and the first locking protrusion is configured to be inserted into the first locking part in a direction away from the first fitting center.

25. The bearing member according to any one of claims 15 to 19, comprising a second magnetic member, wherein the second magnetic member is located in the fitting member, and the second magnetic member is configured to attract a first magnetic member of the support.

26. The bearing member according to any one of claims 15 to 19, wherein a second limiting member is disposed on the fitting member, the second limiting member is exposed on the side that is of the fitting member and that faces the support, the second limiting member is annularly disposed on an outer periphery of the second conductive contact, and the second limiting member is configured to be inserted into a first limiting member of the support.

27. The bearing member according to any one of claims 15 to 19, wherein a second anti-reverse member is disposed on the fitting member, the second anti-reverse member is exposed on the side that is of the fitting member and that faces the support, and the second anti-reverse member is configured to be inserted into a first anti-reverse member of the support.

28. A seat assembly, comprising a seat, a mounting interface, the support according to any one of claims 1 to 14, and the bearing member according to any one of claims 15 to 27, wherein
the mounting interface comprises a mounting member, at least a part of the mounting member is located in the seat, the mounting member has a mounting groove, an opening of the mounting groove is exposed to an outer side of the seat, and an end that is of a second support member of the support and that is away from a first support member of the support is inserted into the mounting groove.

29. The seat assembly according to claim 28, wherein two second fitting locking members are spaced apart on the mounting member in a second direction, and a second fitting locking part of the second fitting locking member is exposed to an inner side of the mounting groove;
the second fitting locking part is inserted into a second locking part on the second support member, to form a second locked state of the support and the mounting interface; and
insertion directions of the second locking part and the second fitting locking part are in the second direction, and the second direction is different from a groove depth direction of the mounting groove.

30. The seat assembly according to claim 29, wherein the mounting interface comprises a second locking elastic member and a second rotating shaft, the second fitting locking member comprises a second rotating part facing away from the second fitting locking part, the second locking elastic member is separately connected to the mounting member and the second fitting locking member, and the second rotating part is rotatably connected to the mounting member through the second rotating shaft;
there is a second fitting center between the two second fitting locking members, the second fitting locking part is a second locking protrusion, and the second locking protrusion is inserted into the second locking part in a direction toward the second fitting center; and
the second locking protrusion rotates in the direction toward the second fitting center under elastic force of the second locking elastic member.

31. The seat assembly according to any one of claims 28 to 30, comprising a protective member, wherein the protective member covers the opening of the mounting groove, a first protective end of the protective member is rotatably connected to the mounting member, and a second protective end of the protective member rotates in a direction close to or away from a bottom wall of the mounting groove.

32. The seat assembly according to claim 31, comprising a second reset elastic member, a third rotating shaft, and a stopper, wherein the protective member is rotatably connected to the mounting member through the third rotating shaft, and the stopper is located on a side that is of the protective member and that faces away from the bottom wall of the mounting groove; and
the second reset elastic member is configured to drive the second protective end to rotate in the direction away from the bottom wall of the mounting groove, so that the second protective end abuts against the stopper, to form a reset state of the protective member.

33. The seat assembly according to claim 31, further comprising a fourth magnetic member, wherein the fourth magnetic member is located on a side that is of the second protective end and that faces the bottom wall of the mounting groove, and the fourth magnetic member is configured to repel a third magnetic member of the support.

34. The seat assembly according to any one of claims 28 to 30, further comprising a fourth conductive contact, wherein the fourth conductive contact is disposed on the mounting member and exposed to the inner side of the mounting groove, and the fourth conductive contact is configured to be in contact with a third conductive contact of the support.
